# EUROPEAN PATENT SPECIFICATION

(11) **EP 1 172 476 B1**
(45) Date of publication and mention of the grant of the patent: **08.12.2004**
(21) Application number: 00985960.4
(22) Date of filing: 27.12.2000
(51) Int. Cl.: D07B 1/16, D07B 1/06, B60C 9/00, B29D 30/38, B29B 15/12, D07B 7/18, B29C 47/02, B29D 30/44, D07B 7/14

(54) **DEVICE FOR PRODUCING A RUBBER COATED STRAND**
HERSTELLUNGSVORRICHTUNG FÜR EINEN GUMMIBESCHICHTETEN STRANG
DISPOSITIF POUR LA FABRICATION D'UN FIL RECOUVERT DE CAOUTCHOUC

(30) Priority: 27.12.1999 JP 37007899; 04.02.2000 JP 2000028204; 22.03.2000 JP 2000080853; 22.03.2000 JP 2000080854
(43) Date of publication of application: 16.01.2002
(73) Proprietor: Fuji Seiko Co. Ltd., Hashima-shi, Gifu 501-6257 (JP)
(72) Inventor: TAKAGI, Shigemasa, Hashima-shi, Gifu 501-6257 (JP)
(74) Representative: Banzer, Hans-Jörg, Dipl.-Ing.
(86) International application number: PCT/JP2000/009334
(87) International publication number: WO 2001/048306

(56) References cited:
- EP-A- 0 598 363
- EP-A1- 0 627 521
- WO-A-99/16630
- AU-A- 6 387 680
- DE-A- 2 432 199
- FR-A- 1 128 721
- JP-A- 6 200 491
- JP-A- 9 137 392
- US-A- 1 666 038
- US-A- 2 601 394
- US-A- 3 339 357
- US-A- 3 577 872
- US-A- 3 608 606
- US-A- 3 779 844
- US-A- 3 972 304
- US-A- 4 105 485
- US-A- 4 250 702
- US-A- 4 269 023
- US-A- 5 208 077
- PATENT ABSTRACTS OF JAPAN vol. 017, no. 266 (C-1062), 25 May 1993 (1993-05-25) & JP 05 005288 A (TOKYO SEIKO CO LTD), 14 January 1993 (1993-01-14)
- PATENT ABSTRACTS OF JAPAN vol. 1997, no. 09, 30 September 1997 (1997-09-30) & JP 09 137392 A (SUMITOMO ELECTRIC IND LTD), 27 May 1997 (1997-05-27)

## Description

### TECHNICAL FIELD

The present invention relates to a manufacturing apparatus for rubber membrane coated strands, which is provided with an untwisting device.

### BACKGROUND ART

Typical steel cable that is used to reinforce tires is formed of a strand. The strand is made by twisting steel filaments. A rubber membrane coated cable is formed by coating the periphery of a group of strands with rubber. The rubber membrane coated cable is used to reinforce a carcass and a belt of a tire.

Accordingly, it is required that the rubber be adhered to the peripheral surfaces of each filament of the strand in a chemically optimal manner when the steel cable is used as the rubber membrane coated cable. It is also required that the rubber penetrate between the filaments without any space. If the adhesion of the strands and the rubber is poor or if the rubber has not penetrated in the strands adequately, and such a rubber membrane coated cable is used for a tire, the strand and the rubber may separate during travel of a vehicle. In this case, spaces may appear along the strand. When such spaces appear, water, which penetrates from cuts in the rubber, enters the spaces and causes rust throughout the length of the filaments. This decreases the strength of the rubber membrane coated cable and may cause early separation of the strands and the rubber.

If the rubber does not penetrate in the strands adequately, the strength of the rubber membrane coated cable made of strands deteriorates. To compensate for the deterioration of the strength, it is required to increase the number of strands by a number that corresponds to the predicted amount of deterioration. This increases the weight of the tire. Also, if the strands and the rubber are not adequately adhered to each other, the time lag is caused in the integrated movement of the strands and the rubber. The time lag, or the play, hinders the driving stability and increases the energy loss.

In order to eliminate such problems, steel cables disclosed in Japanese Examined Patent Publication 7-18103 (first prior art), Japanese Unexamined Patent Publication 10-88488 (second prior art), and Japanese Examined Utility Model Publication 3-11276 (third prior art) are proposed.

In the first prior art structure, curved portions and uncurved portions are repeatedly formed in the helical direction on at least one of the filaments that forms a strand. The curved portion and the uncurved portion form spaces between the filaments for the rubber to penetrate.

In the second prior art structure, one core filament, which is positioned in the center of the filaments of a strand, is a flat filament that has a continuous wave along the length of the filament. The core filament forms spaces to allow the rubber to penetrate between the filaments.

In the third prior art structure, a groove is formed on the peripheral surface of each filament of the strand and extends along the length of each filament. The rubber penetrates via the groove of each filament. Thus, each filament and the rubber are adhered adequately and the rubber penetrates between the filaments adequately.

The prior art structures have the following problems.

In the first and second prior art structures, at least one of the filaments has a deformed portion along its length. Therefore, the filament has different characteristics from the other filaments. Thus, when an external force is applied to the filaments, the force is not supported by each filament equally. In other words, the filaments must be provided with more strength than would be required in the absence of the deformed portion. When applying rubber membrane coating to the strands with a rubber extruder, axial tension is applied to the strands. Thus, amount of displacement at a deformed part of a particular filament under static pressure is not guaranteed after the rubber membrane is coated.

In the third prior art structure, since a portion of the circular cross-section of each filament is missing, the tensile strength per unit of cross-sectional area of a strand decreases significantly. In addition, the twisting and bending properties of the filaments deteriorate significantly.

A manufacturing apparatus for a rubber membrane coated strand according to the preamble of independent claim 1 is, e.g., known from US-A-3,577,872. The manufacturing apparatus of this document comprises rubber supplying means including a container for liquefied rubber, guiding means for guiding the strand to run through the rubber supplying means, and untwisting means for untwisting filaments so that a rubber membrane is coated all around each filament when the strand is guided through the rubber supplying means. A similar manufacturing apparatus is also known from US-A-2,601,394, US-A-3,779,844, FR-A-1 128 721, US-A-3,972,304, EP-A-0 598 363, AU-A-63876/80, US-A-4,105,485, US-A-4,269,023, US-A-5,208,077, US-A-4,250,702 and US-A-3,339,357.

It is an objective of the present invention to provide a manufacturing apparatus for a rubber membrane coated strand that has a predetermined strength against external force and is adequately adhered to the rubber so that the rubber membrane coated strand is rust-free, absorbs vibration, and suppresses frictional heating.

### DISCLOSURE OF THE INVENTION

According to the present invention, this objective is achieved by a manufacturing apparatus as defined by independent claim 1. The dependent claims define preferred and advantageous embodiment of the invention.

According to the present invention, a manufacturing apparatus for a rubber membrane coated strand is provided. The manufacturing apparatus is obtained by supplying the rubber membrane coating to the strand, which is formed by twisting filaments. The manufacturing apparatus includes rubber supplying means, guiding means, and untwisting means. The rubber supplying means includes a container for liquefied rubber. The guiding means guides the strand to run through the rubber supplying means. The untwisting means untwists each filament so that the rubber membrane is coated all around each filament when the strand is guided through the rubber supplying means.

According to the present invention, the untwisting means comprises a rotor having a main body and a small diameter projection formed on the main body, and the main body has a plurality of openings formed at a predetermined distance from each other, through which the filaments separately pass. The small diameter projection has a plurality of grooves, through which the filaments also separately pass, and each of which is connected with each opening of the main body. When each filament of the strand is conveyed through the opening and the corresponding groove, each filament is untwisted and a predetermined space is formed between the filaments.

Twisting means may be provided for twisting the untwisted filament.

Pretreatment means for performing pretreatment on the strand may be provided upstream of the rubber supplying means.

Post-treatment means for performing post-treatment on the strand may be provided downstream of the rubber supplying means.

According to the present invention, the filaments are reliably kept twisted. Thus, the present invention provides the rubber membrane coated strand that has a predetermined strength against external force. The rubber membrane coated strand is also adequately adhered with the rubber. The rubber membrane coating is applied to the strand when the filaments are untwisted. Therefore, the rubber membrane coating is effectively applied to the filaments without forming spaces between the filaments. Therefore, the invention prevents water from entering through a cut in the rubber from causing rust throughout the length of the filaments. In other words, the invention provides an improved corrosion-resistant rubber-coated strand. Further, since a rubber layer is between the filaments, the invention absorbs vibration. The invention suppresses the frictional heating that is produced by direct contact between the filaments.

A priming treatment is performed on each filament. Therefore, the rubber adheres well to the filaments. Thus, the quality of the strand, or the resulting tire is improved.

The rubber membrane coating is applied to the group of strands so that the strands form a ribbon. Therefore, a ribbon-like rubber membrane coated strand, which is formed of strands, is obtained.

Paths are formed in the rotor substantially in the axial direction. The rotor rotates about an axis. Each filament of the strand is separated and follows a path. Accordingly, the strand, which is formed by twisting filaments, is untwisted and a predetermined space is formed between the filaments with a simple structure.

Rotating means may be provided to apply rotational force to the rotor in the direction of twisting. Thus, even when the filaments do not retwist due to their own elasticity after being untwisted, the filaments are reliably retwisted by the rotation of the rotor.

A rubber membrane coating means is provided downstream of the untwisting device. The rubber membrane coating means applies the rubber membrane coating to the periphery of each filament of the untwisted strand. Therefore, the rubber membrane coating is applied to the periphery of each strand while the strand is untwisted by the untwisting device.

The pretreatment means for performing pretreatment on the strand is upstream of the rubber supplying means. Thus, the layer of rubber membrane coating is reliably applied to the periphery of each filament of the strand.

The post-treatment means for performing post-treatment on the strand is provided downstream of the rubber supplying means. Therefore, the layer of rubber membrane coating is quickly formed on the periphery of each strand. Thus, the efficiency is improved.

As a result, the invention allows manufacturing of a lightweight tire, which improves driving stability and vehicle comfort.

### BRIEF DESCRIPTION OF THE DRAWINGS

Fig. 1 is a cross-sectional view of a manufacturing apparatus for a rubber membrane coated strand according to a first embodiment.
Fig. 2 is a perspective view illustrating an untwisting device of the strand manufacturing apparatus of Fig. 1.
Figs. 3 (a), 3 (b), 3 (c), and 3 (d) are enlarged cross-sectional views taken along lines 3a-3a, 3b-3b, 3c-3c, and 3d-3d in Fig. 1 illustrating a manufacturing process of a rubber membrane coated strand according to the strand manufacturing apparatus of Fig. 1.
Fig. 4 is a cross-sectional view of a manufacturing apparatus for a rubber membrane coated strand according to a second embodiment.
Fig. 5 is a perspective view illustrating an untwisting device according to a third embodiment.
Figs. 6 (a) to 6 (d) are cross-sectional views illustrating a manufacturing process of the rubber membrane coated strand using an untwisting device of Fig. 5 in correspondence with Figs. 3 (a) to 3 (d).
Fig. 7 is a front view of a manufacturing apparatus of a ribbon-like rubber membrane coated strand according to a fourth embodiment.
Fig. 8 is a plan view of the ribbon manufacturing apparatus of Fig. 7.
Fig. 9 is an enlarged cross-sectional view illustrating a part of a rubber membrane coating chamber in the ribbon manufacturing apparatus of Fig. 7.
Fig. 10 is a longitudinal section illustrating a preheating chamber and a drying chamber of the ribbon manufacturing apparatus of Fig. 7.
Fig. 11 is a cross-sectional view of the preheating chamber and the drying chamber in Fig. 10.
Figs. 12 (a) to 12 (d) are enlarged cross-sectional views taken along lines 12a-12a, 12b-12b, 12c-12c, and 12d-12d in Figs. 7 and 9 illustrating a ribbon manufacturing process of the ribbon manufacturing apparatus in Fig. 7.
Fig. 13 is a front view of a belt manufacturing apparatus for manufacturing a belt from the ribbon, which is manufactured by the ribbon manufacturing apparatus in Fig. 7.
Fig. 14 is a plan view of the belt manufacturing apparatus of Fig. 13.
Figs. 15 (a) to 15 (c) are plan views illustrating a winding drum used for manufacturing an internal belt in the belt manufacturing apparatus of Fig. 13 and a manufacturing process of the internal belt.
Figs. 16 (a) to 16 (c) are plan views illustrating a winding drum used for manufacturing an external belt in the belt manufacturing apparatus of Fig. 13 and a manufacturing process of the external belt.
Fig. 17 is a front view of a manufacturing apparatus for a ribbon-like rubber membrane coated strand according to a fifth embodiment.
Fig. 18 is a plan view of a ribbon manufacturing apparatus of Fig. 17.
Fig. 19 is an enlarged cross-sectional view illustrating a part of a rubber membrane coating chamber in the ribbon manufacturing apparatus of Fig. 17.
Figs. 20 (a) to 20 (d) are enlarged cross-sectional views taken along lines 20a-20a, 20b-20b, 20c-20c, and 20d-20d in Figs. 17 and 19 illustrating a ribbon manufacturing process of the ribbon manufacturing apparatus of Fig. 17.
Fig. 21 is a front view of a ply manufacturing apparatus for manufacturing a body ply from the ribbon manufactured by the ribbon manufacturing apparatus of Fig. 17.
Fig. 22 is a plan view of the ply manufacturing apparatus of Fig. 21.
Figs. 23 (a) and 23 (b) are plan view and side view illustrating a manufacturing process of the body ply.
Figs. 24 (a) to 24 (c) are also side views illustrating the manufacturing process of the body ply.
Fig. 25 is a cross-sectional view illustrating a manufacturing apparatus of a rubber membrane coated strand according to a sixth embodiment.
Fig. 26 is a cross-sectional view of a manufacturing apparatus for a ribbon-like rubber membrane coated strand according to a seventh embodiment.
Fig. 27 is a cross-sectional view illustrating another manufacturing apparatus of a rubber membrane coated strand.
Fig. 28 is a plan view illustrating the important portion of the strand manufacturing apparatus of Fig. 27.
Fig. 29 is a side view illustrating another untwisting device.
Fig. 30 is a cross-sectional view taken along line 30-30 in Fig. 29.
Fig. 31 is a cross-sectional view illustrating a structure of a tire using the rubber membrane coated strand or the ribbon manufactured in each embodiment.
Fig. 32 is a cross-sectional view illustrating a structure of a tire different from that of Fig. 31.
Figs. 33 (a) and 33 (b) are perspective views illustrating a belt used in the tire shown in Figs. 31 or 32.
Figs. 34 (a) and 34 (b) are perspective views illustrating an edge band used in the tire shown in Figs. 31 or 32.
Figs. 35 (a) to 35 (c) are an enlarged perspective views illustrating the structure of the portion indicated by X in Figs. 31 and 32, and perspective views illustrating the side-reinforcing ply and the body ply used in this portion.
Figs. 36 (a) to 36 (c) are an enlarged perspective view illustrating the other structure of the portion indicated by X in Figs. 31 and 32, and a perspective views illustrating the side-reinforcing ply and the body ply used in this portion.
Figs. 37 (a) to 37 (c) are an enlarged perspective view illustrating different structure of the portion indicated by X in Figs. 31 and 32, and perspective views illustrating the side-reinforcing ply and the body ply used in this portion.
Figs. 38 (a) to 38 (c) are an enlarged perspective view illustrating further different structure of the portion indicated by X in Figs. 31 and 32, and perspective views illustrating the side-reinforcing ply and the body ply used in this portion.

### BEST MODE FOR CARRYING OUT THE INVENTION

### (First Embodiment)

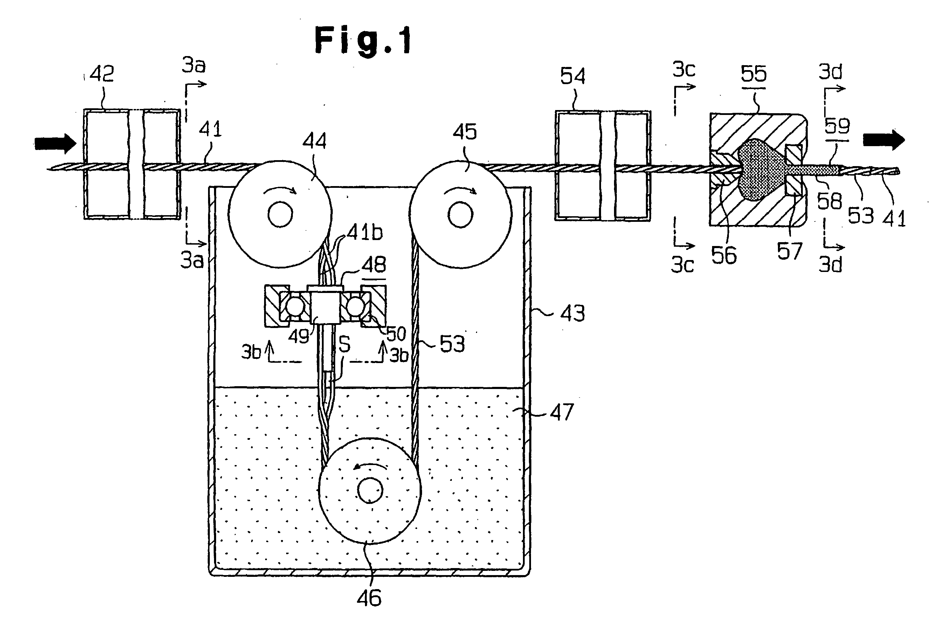

A first embodiment of the present invention will now be described with reference to Figs. 1 to 3.

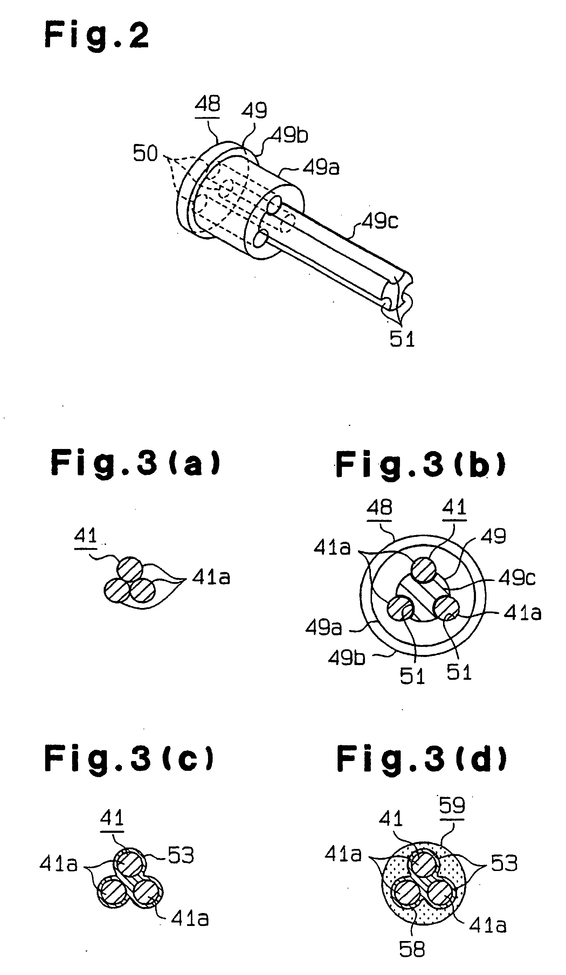

As shown in fig. 1, in a manufacturing apparatus for a rubber membrane coated strand according to the first embodiment, a strand 41 is conveyed longitudinally at a predetermined speed by a conveying mechanism, which is not shown in the figures. As shown in Figs. 1 and 3 (a), the strand 41 is formed by twisting three filaments 41a by a known method. The filaments 41a are made of metal such as steel. Plating, such as tinning, is performed as a priming treatment on each filament 41a to improve adhesion with the rubber. Each filament 41a has uniform, circular cross section.

A preheating chamber 42, which functions as pretreatment means, is provided in the conveying passage of the strand 41. The preheating is performed on the strand 41 in the preheating chamber 42. Instead of preheating, the strand 41 may be washed or coated with an adhesion accelerator as the pretreatment.

A liquid rubber bath 43, which functions as rubber supplying means, is provided downstream of the preheating chamber 42. A pair of upper guide rollers 44, 45 and a lower guide roller 46 are rotatably supported in the liquid rubber bath 43. Liquid rubber 47 is stored in the liquid rubber bath 43. The lower guide roller 46 is immersed in the liquid rubber 47.

A rotor 49 of an untwisting device 48 is arranged in the liquid rubber bath 43 below the upper guide roller 44. The rotor 49 is supported by a bearing 50 and rotates about an axis that extends in the direction in which the strand 41 is conveyed. As shown in Fig. 2, the rotor 49 includes a cylindrical main body 49a, a flange 49b formed on one end of the main body 49a, and a small diameter projection 49c formed on the other end of the main body 49a.

Three openings 51, through which the filaments separately pass, are formed in the main body 49a and the flange 49b of the rotor 49 at a predetermined distance from each other. Three grooves 52, through which the filaments separately pass, are formed on the periphery of the small diameter projection 49c of the rotor 49 at a predetermined distance from each other. The grooves 52 are connected with the openings 51.

As shown in Figs. 1 and 3 (b), the strand 41 passes through the upper guide roller 44. Each filament 41a of the strand 41 is conveyed through the opening 51 and the corresponding groove 52 of the rotor 49 of the untwisting device 48. Thus, each filament 41a is partially untwisted and a predetermined space S is formed between the filaments. The strand 41, which passes through the rotor 49, is conveyed by means of the lower guide roller 46 and the other upper guide roller 45.

As shown in Figs. 1 and 3 (c), the strand 41 passes through the liquid rubber 47 in the liquid rubber bath 43 with the predetermined space S being formed between the filaments 41a. Accordingly, a rubber layer 53 is coated on the periphery of the strand 41. Each filament 41a of the strand 41 is separated by and passed through each opening 51 and the corresponding groove 52. Then, the rotor 49 rotates in the direction of twisting based on the elasticity of the strand 41. Therefore, the filaments 41a are retwisted by their own elasticity before the strand 41 reaches the lower guide roller 46.

A drying chamber 54, which functions as post-treatment means, is provided next to the liquid rubber bath 43 downstream of the conveying passage of the strand 41. After the filaments 41a of the strand 41 are coated by the rubber layer 53, the filaments 41a pass through the drying chamber 54. Therefore, the rubber layer 53 on the filaments 41a is dried.

A rubber extruder 55, which functions as rubber supplying means, is provided downstream of the drying chamber 54. A strand guide 56 is located at the inlet of the rubber extruder 55. A mouthpiece 57 is located at the outlet of the rubber extruder 55. As shown in Figs. 1 and 3 (d), the filaments 41a are retwisted by their own elasticity. Then, the strand 41 is conveyed passing through the rubber extruder 55. Thus, a rubber coating layer 58 is formed on the entire periphery of the strand 41. As a result, a rubber coated strand 59 is manufactured.

Accordingly, the manufacturing apparatus for the rubber membrane coated strand is capable of continuously manufacturing the rubber membrane coated strand 59. That is, the strand 41 is conveyed in the longitudinal direction through the rotor 49 of the untwisting device 48, the liquid rubber bath 43, and the rubber extruder 55. During this process, the rubber layer 53 is applied to the periphery of each filament 41a. Then, the rubber coating layer 58 is formed on the entire periphery of the strand 41.

The first embodiment provides following advantages.

(1) In the apparatus for manufacturing the rubber membrane coated strand of the first embodiment, the strand 41, which is formed by twisting metal filaments 41a, is conveyed in the longitudinal direction through the rotor 49 of the untwisting device 48. The filaments 41a are untwisted and the predetermined space S is formed between the filaments. In this state, the strand 41 passes through the liquid rubber 47 in the liquid rubber bath 43. Thus, the rubber layer 53 is formed on the periphery of each filament 41a. After the filaments 41a are retwisted by their own elasticity, the strand 41 passes through the rubber extruder 55 so that the rubber coating layer 58 is formed on the entire outer surface of the strand 41. As a result, the rubber membrane coated strand 59 is manufactured.

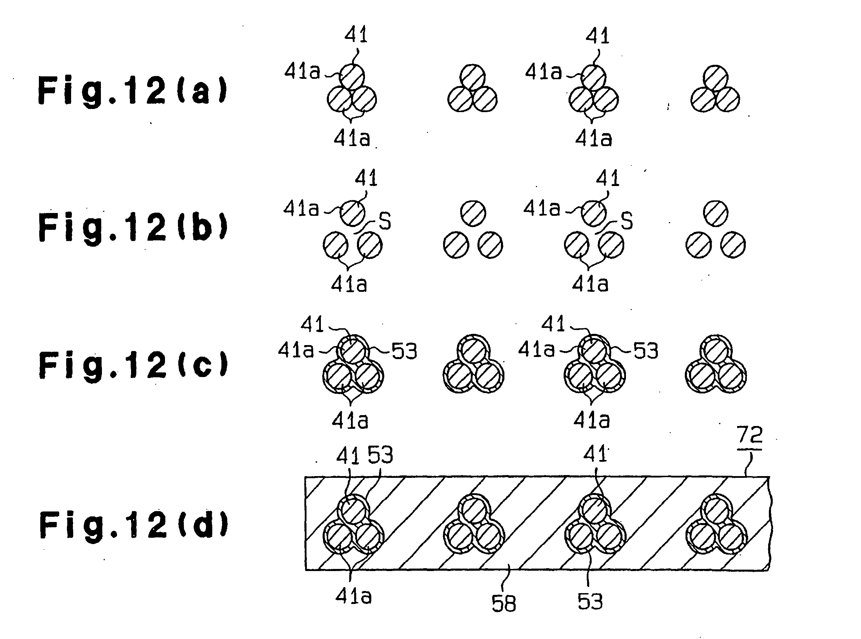

Accordingly, since each filament 41a is twisted equally, each filament 41a supports an external force equally. Therefore, it is not necessary to provide the strand 41 with more than an expected level of strength. The strand 41 is provided with a predetermined strength against external force. Thus, the weight of a resulting tire is reduced. The rubber membrane coated strand 59, in which the filaments 41a of the strand 41 and the rubber are adequately adhered, is obtained. Also, the entire strand 41 is coated with the rubber membrane layer 58 after each filament 41a is coated with the rubber layer 53, which leaves no space between the filaments. Thus, as shown in Fig. 12, there is no space between the filaments 41a of the strand 41. Accordingly, water does not penetrate the strand 41. Thus, the invention provides an improved corrosion-resistant rubber coated strand. Further, since the filaments 41a are separated by the rubber layer 53, the strand absorbs vibration. The strand also suppresses frictional heating produced by direct contact between the filaments 41a.

(2) In the apparatus for manufacturing the rubber membrane coated strand of the first embodiment, the untwisting device 48 includes the rotor 49, which is rotatably arranged along an axis that extends in the direction that the strand 41 is conveyed. The openings 51 and the grooves 52 are formed in the rotor 49 so that each filament 41a is separated and passes through. The simple structure of the untwisting device 48 allows easy formation of the predetermined space S between the untwisted filaments 41a. Accordingly, the rubber layer 53 is formed on each filament 41a equally while the space S is being formed.

(3) In the apparatus for manufacturing the rubber membrane coated strand of the first embodiment, the preheating chamber 42 is provided upstream of the liquid rubber bath 43. The strand 41 is preheated before passing through the liquid rubber 31. Therefore, the liquid rubber 31 is reliably coated on the periphery of the filaments 41a of the strand. Thus, the rubber layer 53 is equally and firmly formed.

(4) In the apparatus for manufacturing the rubber membrane coated strand of the first embodiment, the drying chamber 54 for drying the rubber layer 53 on the periphery of the filaments 41a is downstream of the liquid rubber bath 43. Therefore, the rubber layer 53 is completely dried so that the rubber layer 53 is firmly adhered to the periphery of the filaments 41a. Furthermore, drying the rubber layer 53 prevents the rubber layer 53 from mixing with the rubber membrane layer 58, which is formed by the rubber extruder 55. Accordingly, the function of the rubber membrane coating layer 58 is fully effective.

### (Second Embodiment)

A second embodiment of the present invention will now be described. The differences from the first embodiment will mainly be discussed below.

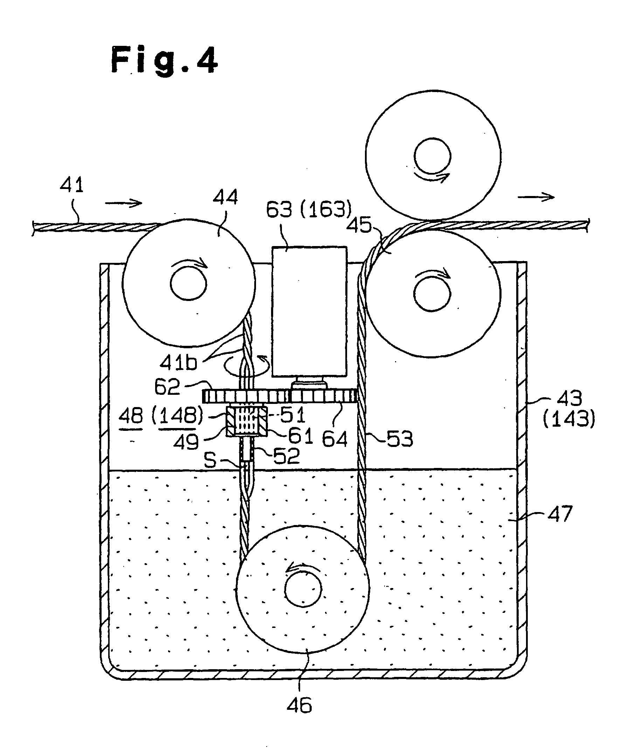

In the second embodiment, as shown in Fig. 4, the strand 41 is formed by twisting three filaments 41b by the known method. The filaments 41b are made of polymeric material such as polyester and nylon. An adhesive coating is applied to each filament 41b as a priming treatment so that each filament 41b adheres to rubber adequately. The rotor 49 of the untwisting device 48, which has the same structure as that of the first embodiment, is rotatably supported in the liquid rubber bath 43 by means of a metal bearing 61. A driven gear 62 is fitted on the upper end of the liquid rubber bath 43. A driving motor 63 is provided in the liquid rubber bath 43 as the rotating means. A driving gear 64, which engages with the driven gear 62, is provided on the motor shaft.

The strand 41 is separated and conveyed through the openings 51 and the corresponding grooves 52 of the rotor 49 of the untwisting device 48. Accordingly, the predetermined space S is formed between the filaments 41b of the strand 41. Then, the strand 41 passes through the liquid rubber 47 in the liquid rubber bath 43. Thus, the rubber layer 53 is formed on the periphery of each filament 41b.

The strand 41 is separated and conveyed through the openings 51 and the corresponding grooves 52 of the rotor 49 of the untwisting device 48. In this state, the driving motor 63 rotates the rotor 49 to twist the strand 41 by means of the driving gear 64 and the driven gear 62. Accordingly, the filaments 41b of the strand 41 are twisted.

Thus, even if each filament 41b of the strand 41 is made of polymeric material and the filaments 41b are loose, the filaments 41b are firmly twisted by the rotation of the rotor 49 after passing through the untwisting device of the rotor 49.

An adhesive coating is applied to each filament 41b as the rubber membrane coating illustrated in Fig. 4. That is, the strand 41 is untwisted by an untwisting device 148. In this state, the strand 41 passes through an adhesive bath 143. Thus, the adhesive is applied to the peripheral surface of each filament 41b. Then, the filaments 41b are twisted by a driving motor 163. The strand 41, then, passes through a drying chamber 154 and the adhesive is dried. Accordingly, the adhesive is equally applied to the entire peripheral surface of each filament 41b.

Thus, according to the second embodiment, the following advantages are provided in addition to the advantages described in (1) to (4) of the first embodiment.

(5) According to the apparatus for manufacturing the rubber membrane coated strand of the second embodiment, the driving motor 63 is provided. The driving motor 63 applies a rotational force to twist the strand 41 to the rotor 49 of the untwisting device 48. Thus, even if the filaments 41b of the strand 41 are made of polymeric material and are not easily retwisted by elasticity after being untwisted, the filaments 41b are reliably retwisted by the rotation of the rotor 49. Instead of the strand 41, which is formed of polymeric material, a strand formed of thin metal filaments with low rigidity may be used. When the rubber membrane coating is applied to the latter strand by twisting the filaments as above, the latter strand may not be retwisted. In this case, the rotor 49 may be rotated in the direction of twisting as above after the rubber membrane is coated.

### (Third Embodiment)

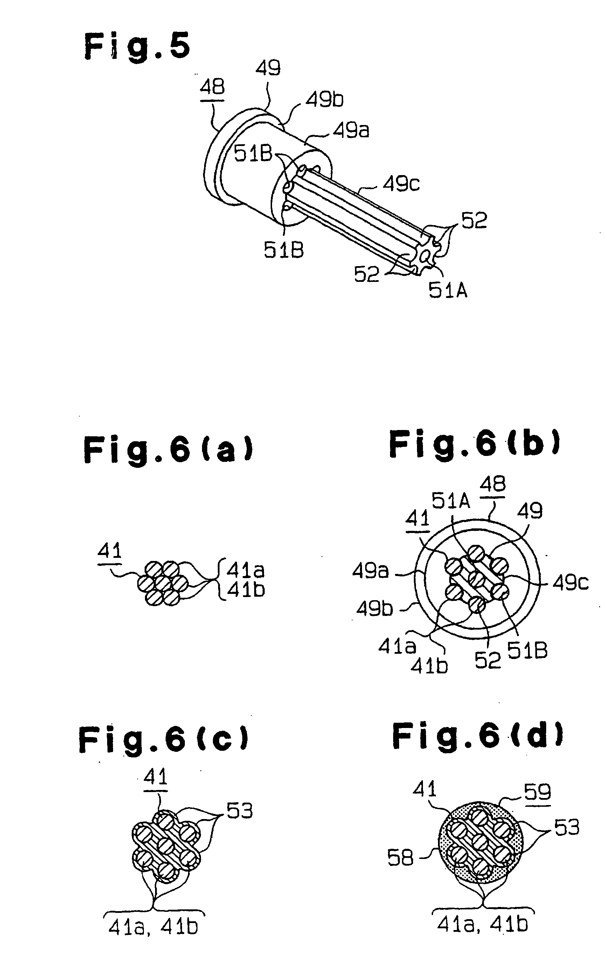

A third embodiment of the present invention will now be described with reference to Figs. 5 and 6. The differences from the above embodiments will mainly be discussed below.

In the third embodiment, as shown in Fig. 6 (a), the strand 41 is formed by twisting six filaments 41a or 41b about a core filament by the known method. Each filament 41a or 41b is made of metal material or polymeric material.

As shown in Figs. 5 and 6 (b), a center opening 51A is formed through the center of the rotor 49 of the untwisting device 48 so that filaments are separated and passed through. Six outer edge openings 51B are formed through the main body 49a and the flange 49b of the rotor 49 at predetermined distances from one another. The outer edge openings 51b are arranged to surround the center opening 51A. Six grooves 52 are formed on the periphery of the small diameter projection 49c of the rotor 49 at predetermined distances from one another. Each groove 52 is connected to the corresponding outer edge opening 51B.

According to the third embodiment, as shown in Figs. 6 (a) to 6 (d), the strand 41, which is formed by twisting seven filaments 41a or 41b, is conveyed in the longitudinal direction. The rubber layer 53 is applied to the periphery of each filament 41a or 41b. Then, the rubber membrane coating layer 58 is applied to the entire periphery of the strand 41. As a result, the rubber membrane coated strand 59 is manufactured. Therefore, advantages, which are substantially the same as the advantages (1) to (5) of the first embodiment and the second embodiment, are obtained.

### (Fourth Embodiment)

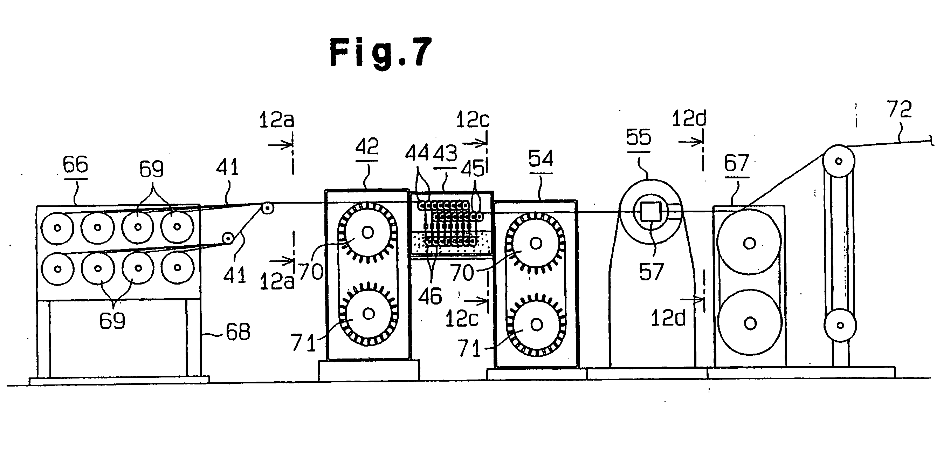

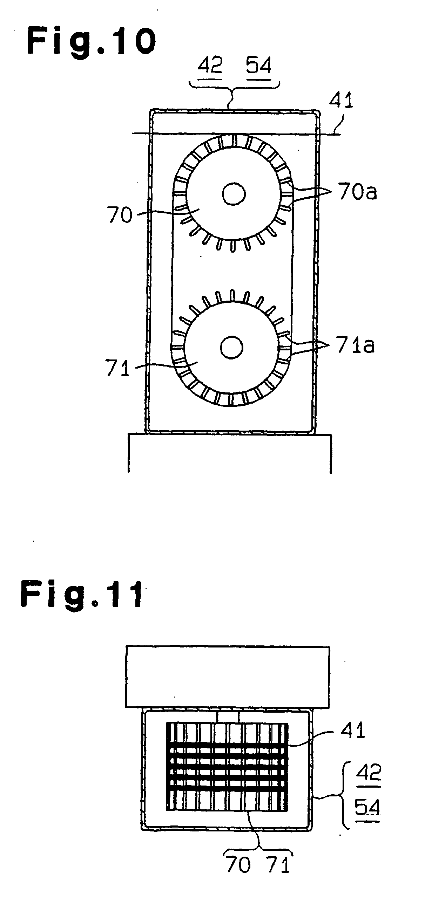

A fourth embodiment of the present invention will now be described with reference to Figs. 7 to 16. The differences from the above embodiments will mainly be discussed below.

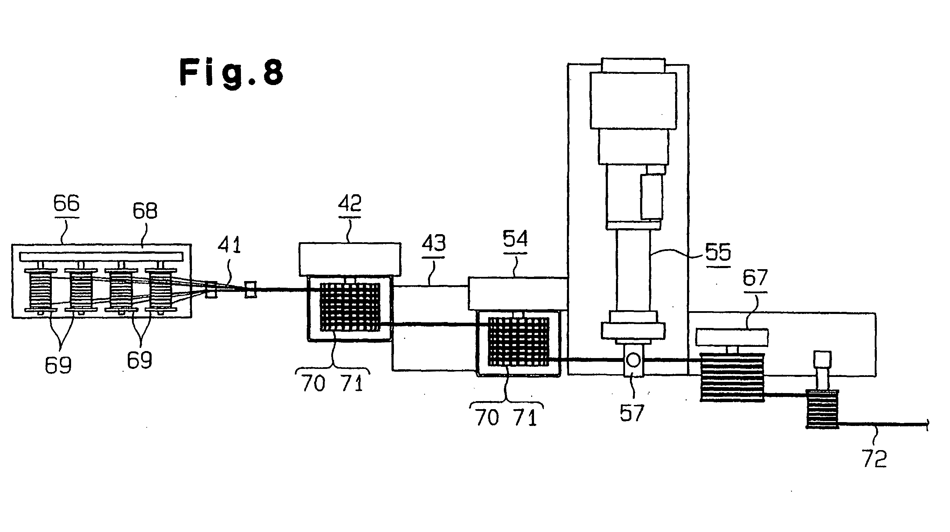

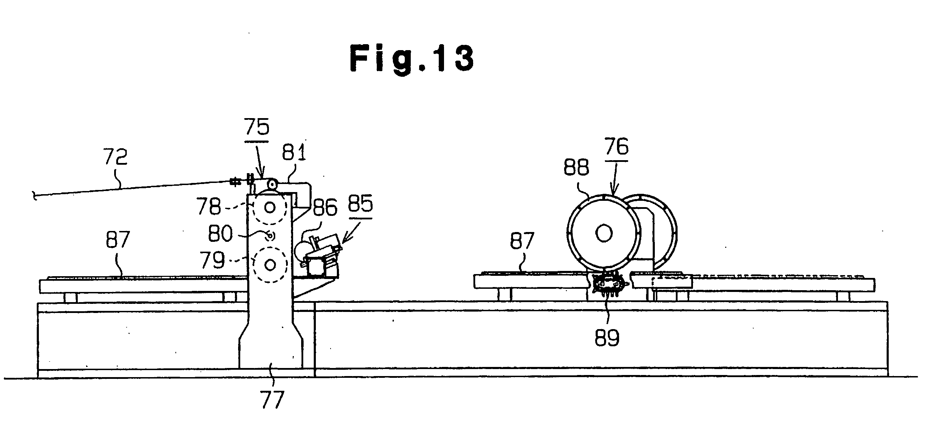

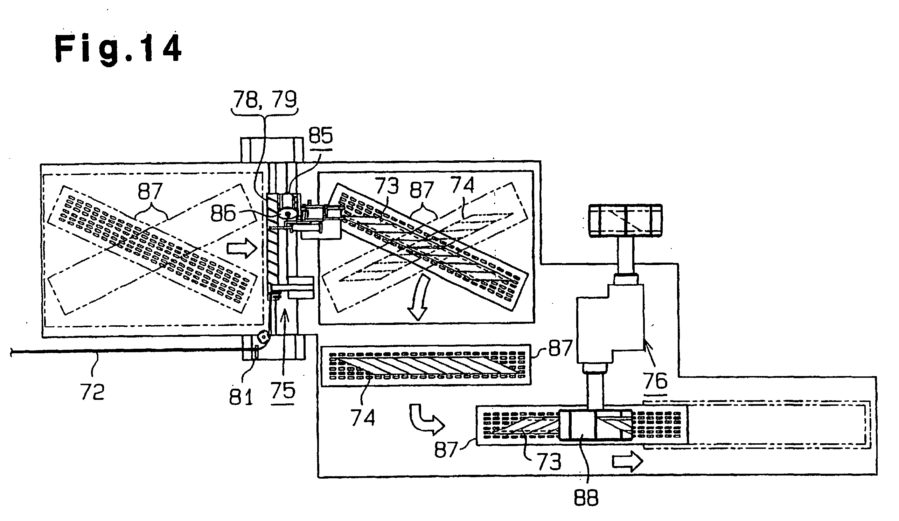

The manufacturing apparatus of the fourth embodiment includes a first manufacturing apparatus and a latter manufacturing apparatus. The first manufacturing apparatus manufactures a ribbon-like rubber membrane coated strand as shown in Figs. 7 and 8. The latter manufacturing apparatus manufactures a belt continuously after the rubber membrane coated strand is manufactured as shown in Figs. 13 and 14. As shown in Figs. 7 and 8, the manufacturing apparatus for the rubber membrane coated strand includes a bobbin rack, a preheating chamber 42 as pretreatment means, a liquid rubber bath 43 as rubber supplying means, a drying chamber 54 as post-treatment means, a rubber extruder 55 as rubber supplying means, and a tensile conveying mechanism 67.

As for the bobbin rack, eight bobbins 69 are rotatably supported on the rack 68 with a brake. The strand 41 is wound around each bobbin 69. The strands 41 are formed by twisting filaments 41a, which are made of metal material, as in the first embodiment. As shown in Figs. 7, 8, and 12 (a), when the tensile conveying mechanism 67 starts operation, eight strands 41 are unwound from the bobbins 69. The strands 41 are aligned laterally with predetermined spaces between one another. Then, the strands 41 are conveyed in the longitudinal direction at a predetermined speed.

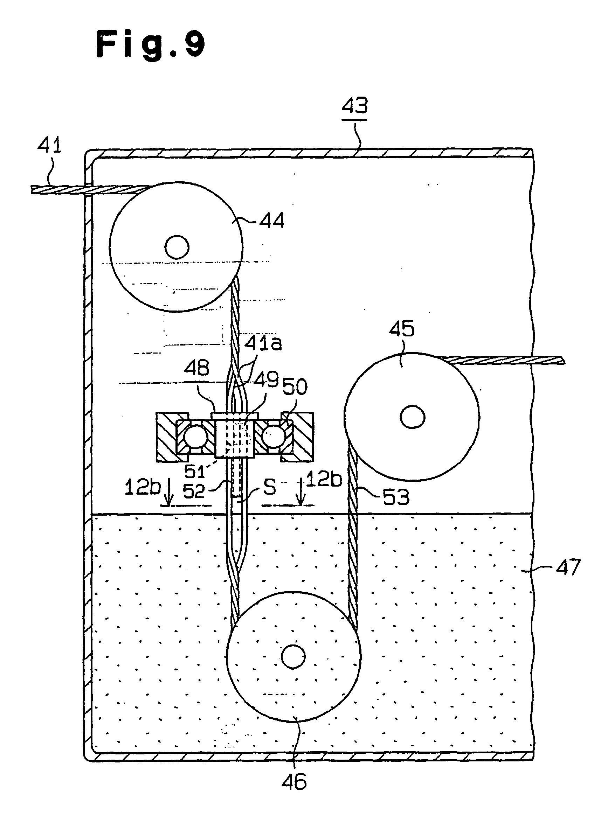

As shown in Figs. 7 to 9, eight combinations of guide rollers 44, 45 and 46, and the untwisting device 48 are arranged in the liquid rubber bath 43 next to each other in correspondence with the conveying passage of each strand 41. The guide rollers 44, 45 and 46 are structured in the same way as those of the first embodiment. As shown in Figs. 9 and 12 (b), each filament 41a of the strand 41 is conveyed through one of the openings 51 and one of the corresponding grooves 52 of the rotor 49 of the untwisting device 48. Thus, each strand 41 is untwisted and the predetermined space S is made between the filaments 41a.

In this state, each strand 41 is conveyed through the liquid rubber 47 in the liquid rubber bath 43. As shown in Fig. 12 (c), a rubber layer 53 is formed on the periphery of the filaments 41a of each strand 41 simultaneously. Furthermore, after the filaments 41a of each strand 41 pass through the corresponding untwisting device 48, the filaments 41a of each strand 41 are retwisted by their own elasticity.

As shown in Figs. 7, 8, 10, and 11, a pair of rollers 70 and 71 are rotatably arranged in the preheating chamber 42 and the drying chamber 54. Multiple teeth project from the periphery of each roller 70 and 71 at predetermined distances from one another. The strands 41 are conveyed through the preheating chamber 42 while following the rollers 70 and 71. Thus, the preheating is uniformly performed on the entire length of each strand 41 prior to coating the rubber layer 53. The strands 41 that have been coated with the rubber layer 53 are conveyed through the drying chamber 54 while following the rollers 70, 71. Thus, the rubber layer 53 on each strand 41 does not attach to the peripheral surface of the rollers 70, 71 and the entire length of each strand 41 is dried uniformly.

A mouthpiece 57, which is similar to that of the first embodiment, is provided on the rubber extruder 55. Each strand 41 is retwisted and conveyed through the mouthpiece 57 of the rubber extruder 55. Thus, as shown in Figs. 7, 8, and 12 (d), the rubber coating layer 58 is formed on the outer surfaces of the strands 41. As a result, a flat ribbon-like rubber membrane coated strand 72 is manufactured.

The latter manufacturing method for continuously manufacturing a belt from the ribbon-like rubber membrane coated strand 72 is described below. As shown in Figs. 13 and 14, the latter manufacturing apparatus includes a belt manufacturing mechanism 75 and a belt forming mechanism 76. The belt manufacturing mechanism 75 manufactures an internal belt 73 and an external belt 74 from the ribbon-like rubber membrane coated strand 72. The belt forming mechanism 76 puts the belts 73, 74 on one another to form a predetermined shape.

In the belt manufacturing mechanism 75, a pair of winding drums 78, 79 with different outer diameters are arranged vertically at a predetermined distance from one another in the stand 77. Helical gullets 78a and 79a with opposite directions of inclination are formed on the peripheries of the winding drums. The winding drums 78, 79 can be reversed about a fulcrum 80 by a reversing mechanism, not shown in the figures, so that the vertical positions of the drums are reversed.

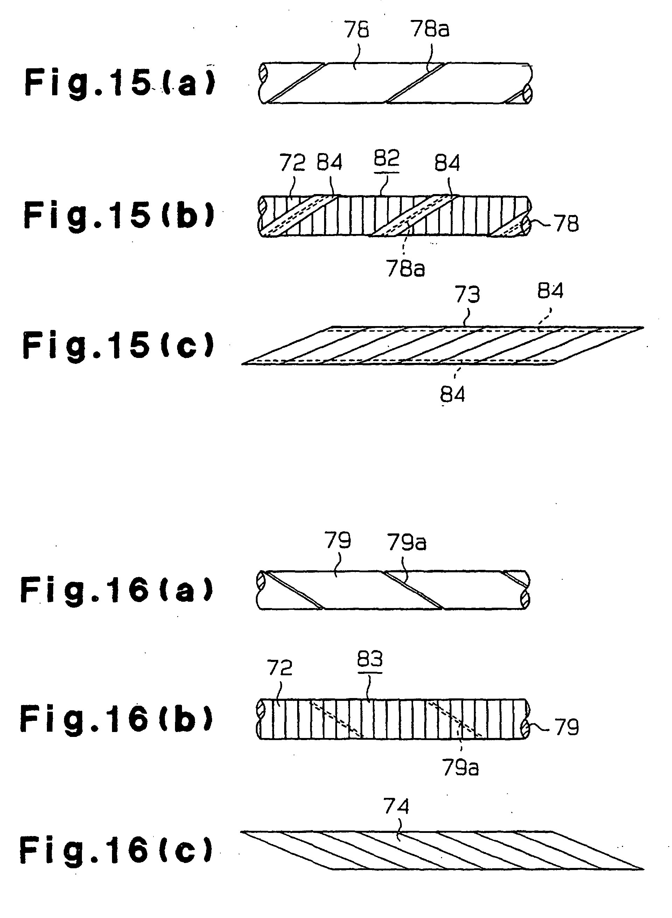

That is, the internal belt 73 and the external belt 74 are located one on the other so that the internal belt 73 is on the internal side and the external belt 74 is on the external side of the typical tire. Thus, the width of the internal belt 73 and that of the external belt 74 are different. Therefore, the outer diameter of the winding drum 78 for forming the internal belt 73 and that of the winding drum 79 for forming the external belt 74 are different. As shown in Figs. 15 (a) and 16 (a), the winding drum 78 has the helical gullet 78a, which slopes up to the right, and the other winding drum 79 has the helical gullet 79a, which slopes down to the left.

While one of the winding drums 78 or 79 is at the upper position, the ribbon-like rubber membrane coated strand 72 is guided by a guiding mechanism 81 so that the strand 72 is wound around the periphery of one of the winding drums 78 and 79 so that cohesion occurs between the wraps of the ribbon-like strand 72. Accordingly, as shown in Figs. 15 (b) and 16 (b), one of two cylindrical wound bodies 82 and 83 with a desired length is formed. Then, the vertical position of the winding drums 78, 79 is reversed by the reversing mechanism. Thus, one of the winding drums 78, 79 on which the cylindrical wound body 82 or 83 is formed, is located at a lower position.

In this state, an edge tape 84 is wound around and adhered to the periphery of the cylindrical wound body 82 on the winding drum 78 along the gullet 78a by a tape winding mechanism, which is not shown in the figures. Then, each cylindrical wound body 82, 83 on the corresponding winding drum 78, 79 is cut along the corresponding gullet 78a or 79a by a cutting mechanism 85. The cutting mechanism 85 has a rotating blade 86. Accordingly, as shown in Figs. 15 (c) and 16 (c), the internal belt 73 and the external belt 74 are manufactured. The belts 73, 74 are separated from the periphery of the corresponding winding drum 78, 79 by a separating member, which is not shown in the figures. Then, the belts 73, 74 are transferred to a perforated tray 87.

As shown in Figs. 13 and 14, the belt forming mechanism 76 includes a forming drum 88 and a rolling device 89. The perforated tray 87, on which the internal belt 73 is placed, moves to the position under the forming drum 88 along a rail, which is not shown in the figures. The internal belt 73 on the perforated tray 87 is adhered to the periphery of the forming drum 88 by the pressing operation of the rolling device 89 so that cohesion occurs between the wraps of the internal belt 73. Then, the perforated tray 87, on which the external belt 74 is placed, moves to the position under the forming drum 88. The external belt 74 on the perforated tray 87 is adhered to the periphery of the forming drum 88 so that cohesion occurs between the wraps of the external belt 74. Thus, the internal belt 73 and the external belt 74 are applied to one another. Then, the internal belt 73 and the external belt 74 are separated from the forming drum 88. As a result, a belt used for a tire crown area is manufactured.

Accordingly, a belt with a length that is equivalent to one tire is automatically and continuously manufactured after manufacturing the ribbon-like rubber membrane strand 72, unless the size of the tire is changed.

Thus, according to the fourth embodiment, the following advantages are provided in addition to the advantages (1) to (4) of the first embodiment.

(6) In the manufacturing apparatus for the rubber membrane coated strand in the fourth embodiment, the rubber membrane coating is applied to a group of strands 41 to form the ribbon-like rubber membrane coated strand 72. Therefore, it is not required to first form the rubber membrane coated strand with one strand 41, and then to form the ribbon-like rubber membrane coated strand 72 with group of the rubber membrane coated strands. Thus, the ribbon-like rubber membrane coated strand 72 is easily manufactured.

(7) In the manufacturing apparatus for the belt in the fourth embodiment, the belt is continuously manufactured using the ribbon-like rubber membrane coated strand 72 manufactured by the manufacturing apparatus for the rubber membrane coated strand. Therefore, it is not required to store the ribbon-like rubber membrane coated strand 72 after it is manufactured. Thus, the belt is efficiently manufactured continuously after the ribbon-like rubber membrane coated strand 72 is manufactured.

### (Fifth Embodiment)

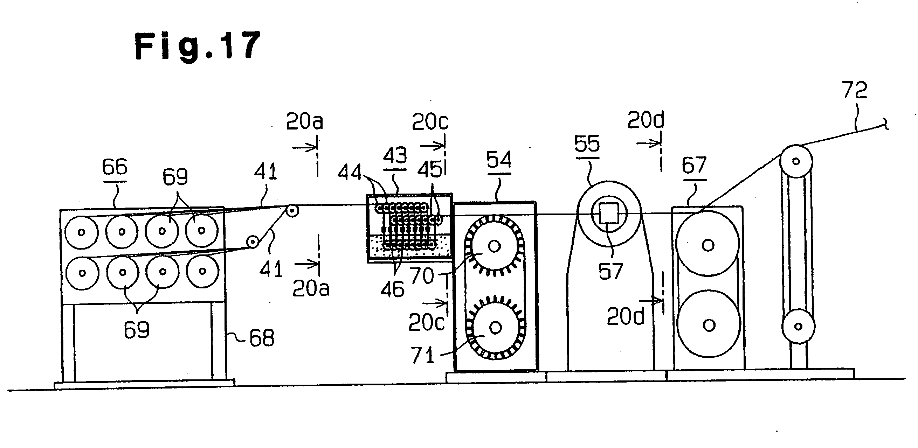

A fifth embodiment of the present invention will now be described with reference to Figs. 17 to 24. The differences from the above embodiments will mainly be discussed below.

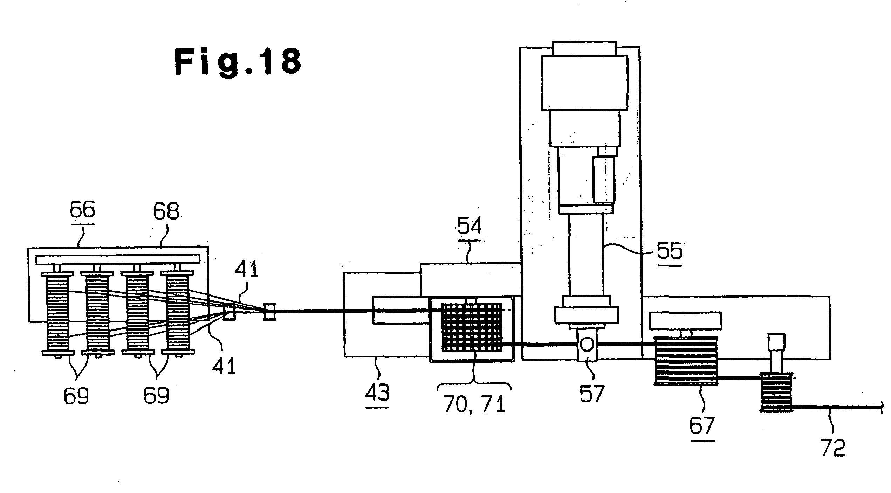

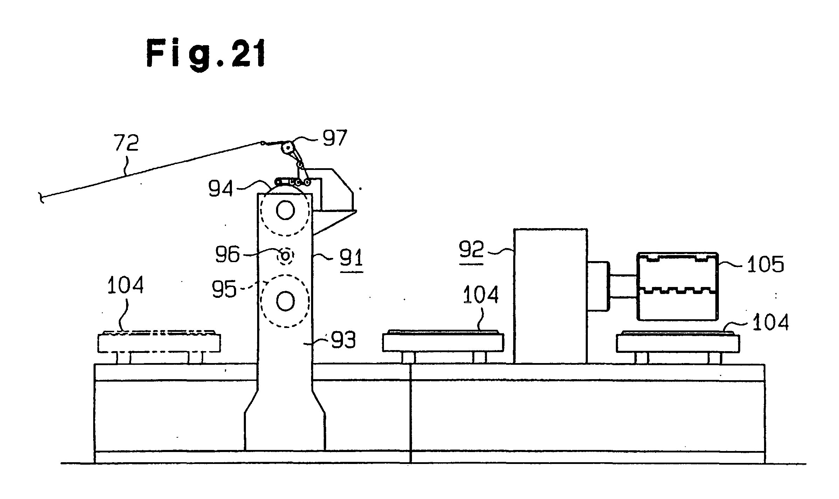

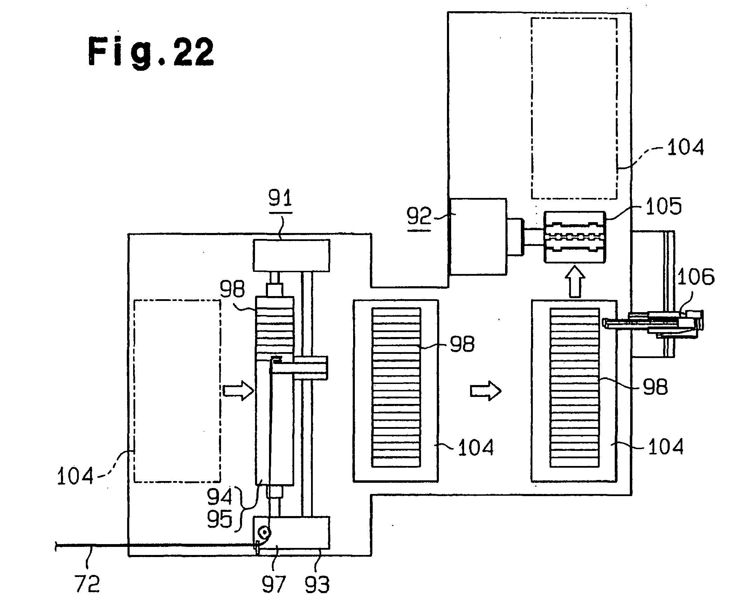

The manufacturing apparatus of the fifth embodiment includes a first manufacturing apparatus and a latter manufacturing apparatus. The first manufacturing apparatus manufactures the ribbon-like rubber membrane coated strand shown in Figs. 17 and 18. The latter manufacturing apparatus manufactures a body ply continuously after the rubber membrane coated strand is manufactured, as shown in Figs. 21 and 22. As shown in Figs. 17 and 18, the manufacturing apparatus for the rubber membrane coated strand includes a bobbin rack, a liquid rubber bath 43, or rubber supplying means, a drying chamber 54, or post-treatment means, a rubber extruder 55, or rubber supplying means, and a tensile conveying mechanism 67.

The bobbin rack has eight bobbins 69, the structures of which are substantially the same as that of the fourth embodiment. The strand 41 is wound around each bobbin 69. Each strand 41 of the fifth embodiment is formed by twisting the filaments 41b, which are made of polymeric material as in the second embodiment. As shown in Figs. 17, 18, and 20 (a), when the tensile conveying mechanism 67 starts operation, eight strands 41 are unwound from the corresponding bobbin 69. The strands 41 are aligned laterally with predetermined spaces between one another. Then, the strands 41 are conveyed in the longitudinal direction at a predetermined speed.

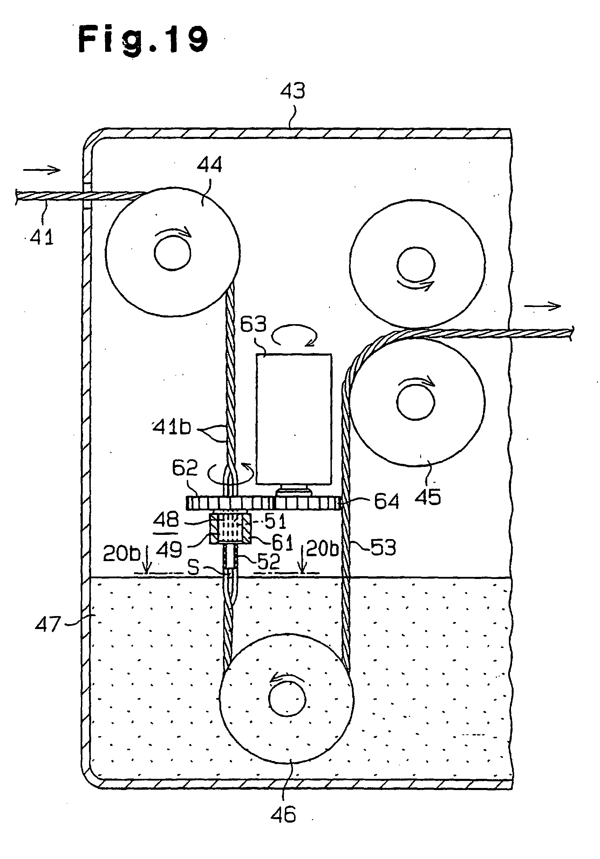

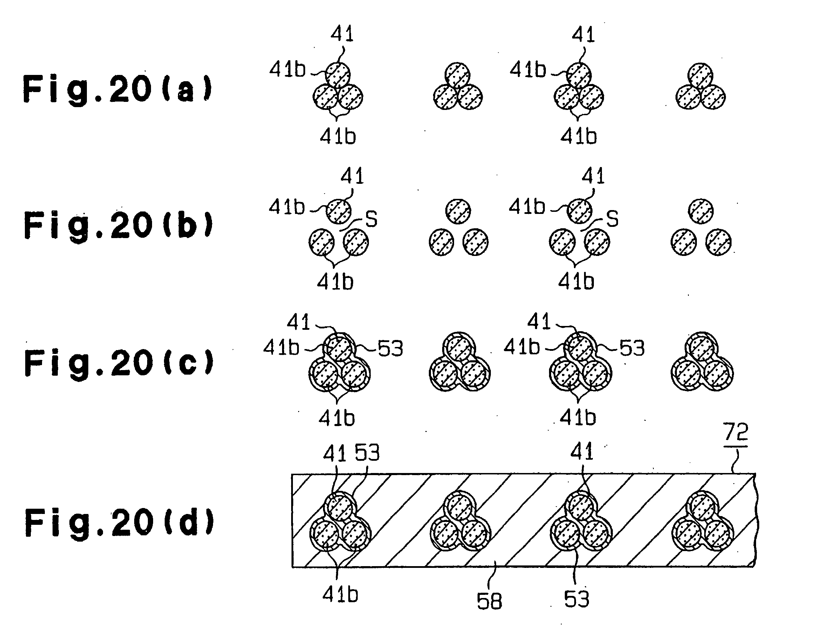

As shown in Figs. 17 to 19, eight combinations of guide rollers 44, 45 and 46, the untwisting device 48, and a driving motor 63 are arranged in the liquid rubber bath 43 next to each other in correspondence with the conveying passage of each strand 41. The guide rollers are structured in the way of the second embodiment. As shown in Figs. 19 and 20 (b), the rotor 49 of each untwisting device 48 is rotated by the driving motor 63 in the direction of twisting the strand 41. Each filament 41b of the corresponding strand 41 is conveyed through one of the openings 51 and the corresponding groove 52 of the rotor 49 of the untwisting device 48. Thus, the strands 41 are untwisted and a predetermined space S is formed between the filaments 41a.

In this state, each strand 41 is conveyed through the liquid rubber 47 in the liquid rubber bath 43. As shown in Fig. 20 (c), a rubber layer 53 is formed on the periphery of the filaments 41b of each strand 41 simultaneously. Furthermore, after the filaments 41b of each strand 41 pass through the untwisting device 48, the filaments 41b of each strand 41 are retwisted by elasticity.

As shown in Figs. 17 and 18, a pair of rollers 70 and 71, which have the structure of the rollers 70, 71 of the fourth embodiment, are located in the drying chamber 54. The strands 41, which have been coated with the rubber layer 53, are conveyed through the drying chamber 54 while following the rollers 70, 71. Thus, the entire length of the rubber layer 53 on each strand 41 is dried uniformly.

Furthermore, a mouthpiece 57, which is similar to that of the first and fourth embodiments, is provided on the rubber extruder 55. The strands 41 are retwisted and conveyed through the mouthpiece 57 of the rubber extruder 55. Thus, as shown in Figs. 17, 18, and 20 (d), the rubber coating layer 58 is formed on the entire periphery of the strands 41. As a result, the flat ribbon-like rubber membrane coated strand 72 is manufactured.

A latter manufacturing method for continuously manufacturing the body ply from the ribbon-like rubber membrane coated strand 72 is described below. As shown in Figs. 21 and 22, the latter manufacturing apparatus includes a ply manufacturing mechanism 91 and a ply forming mechanism 92. The ply manufacturing mechanism 91 manufactures a cylindrical wound body from the ribbon-like rubber membrane coated strand 72. The ply forming mechanism 92 manufactures the body ply from the cylindrical ply.

In the ply manufacturing mechanism 91, a pair of winding drums 94, 95 are arranged vertically at a predetermined distance from one another in the stand 93. The winding drums 94, 95 can be reversed about a fulcrum 96 by a reversing mechanism, which is not shown in the figures, so that the vertical positions of the drums are reversed. While one of the winding drums 94 and 95 is at the upper position, the ribbon-like rubber membrane coated strand 72 is guided by a guiding mechanism 97 so that each strand 72 is wound around the periphery of one of the winding drums 94, 95 so that cohesion occurs between the wraps of the ribbon-like strand 72. As shown in Fig. 22, a cylindrical wound body 98 with a desired length is formed. Then, the vertical position of the winding drums 94, 95 is reversed by the reversing mechanism. Thus, one of the winding drums 94 and 95, on which the cylindrical wound body 98 is formed, is located at the lower position.

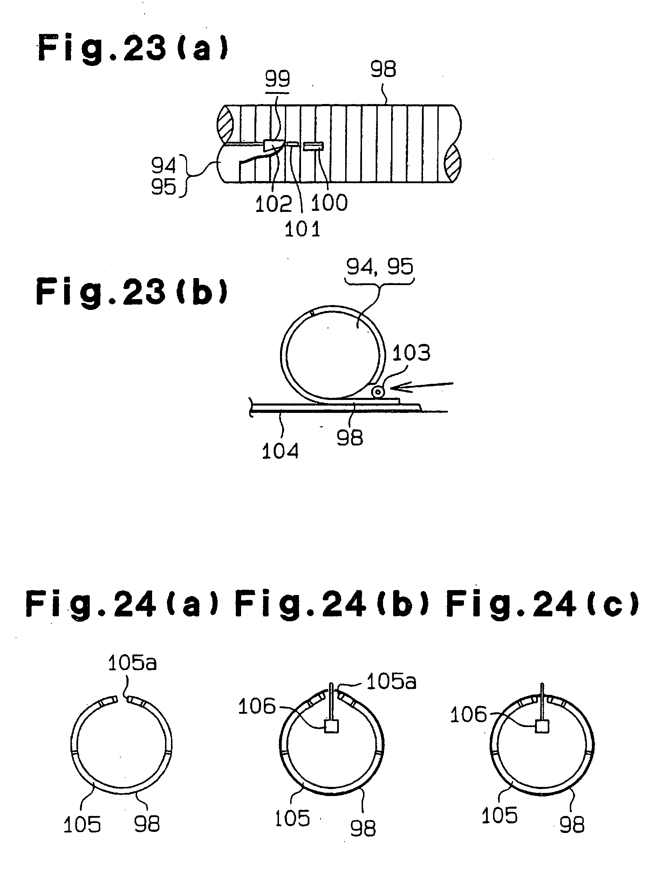

In this state, as shown in Fig. 23 (a), a cutting mechanism 99 approaches the cylindrical wound body 98 on the one winding drum 94, 95, which is at the lower position. The cutting mechanism 99 cuts the cylindrical wound body 98 along its length. The cutting mechanism 99 includes a pressure roller 100, a cutter 101, and a separating member 102. The members 100, 101, and 102 move integrally along the length of the cylindrical wound body 98. The cylindrical wound body 98 is cut by the cutter 101. Then, the separating member 102 separates the cut edge of the cylindrical wound body 98 from the periphery of the one winding drum 94, 95.

Next, the one winding drum 94, 95 rotates so that the cut edge of the cylindrical wound body 98 hangs down. In this state, as shown in Fig. 23 (b), the separating bar 103 is inserted between the cut edge of the cylindrical wound body 98 and the peripheral surface of the one winding drum 94, 95. The cylindrical wound body 98 is forcefully separated from the peripheral surface of the one winding drum 94, 95 in correspondence with the simultaneous movement of the separating bar 103 and the rotation of the winding drums 94, 95. The separated cylindrical wound body 98 is transferred to the tray 104, which is waiting below one of the winding drums 94, 95.

As shown in Figs. 21 and 22, the ply forming mechanism 92 includes a forming drum 105 and a seaming apparatus 106. An opening 105a, which extends along the length of the drum 105, is provided on the periphery of the forming drum 105. The tray 104, on which the cut cylindrical wound body 98 is placed, moves to a position under the forming drum 105 along a rail, which is not shown in the figures. The relative movement between rotation of the forming drum 105 and the tray 104 winds the cylindrical wound body 98 that is on the tray 104 around the periphery of the forming drum 105 so that cohesion occurs between the cylindrical wound body 98 and the periphery of the forming drum 105. The seaming apparatus 106 moves to a position corresponding to the forming drum 105.

As shown in Fig. 24 (a), the forming drum 105 rotates by a predetermined angle so that the opening 105a of the forming drum 105 is at the top. The opening 105a is where the leading and the trailing ends of the cylindrical wound body 98 meet each other. In this state, as shown in Figs. 24 (b) and 24 (c), the seaming apparatus 106 moves along the opening 105a of the forming drum 105. The seaming apparatus 106 joins the start and the end of winding of the cylindrical wound body 105 so that the body ply is manufactured.

Thus, according to the fifth embodiment, the following advantages are provided in addition to the advantages described in (1), (2), and (4) to (6) of the above embodiments.

(8) In the apparatus for manufacturing the ply in the fifth embodiment, body plys are continuously manufactured using the ribbon-like rubber membrane coated strand 72 that is manufactured by the manufacturing apparatus for the rubber membrane coated strand. Therefore, it is not required to store the ribbon-like rubber membrane coated strand 72 after it is manufactured. Thus, body plys are efficiently manufactured continuously after the ribbon-like rubber membrane coated strand 72 is manufactured.

### (Sixth Embodiment)

A sixth embodiment of the present invention will now be described. The differences from each embodiment will mainly be discussed below.

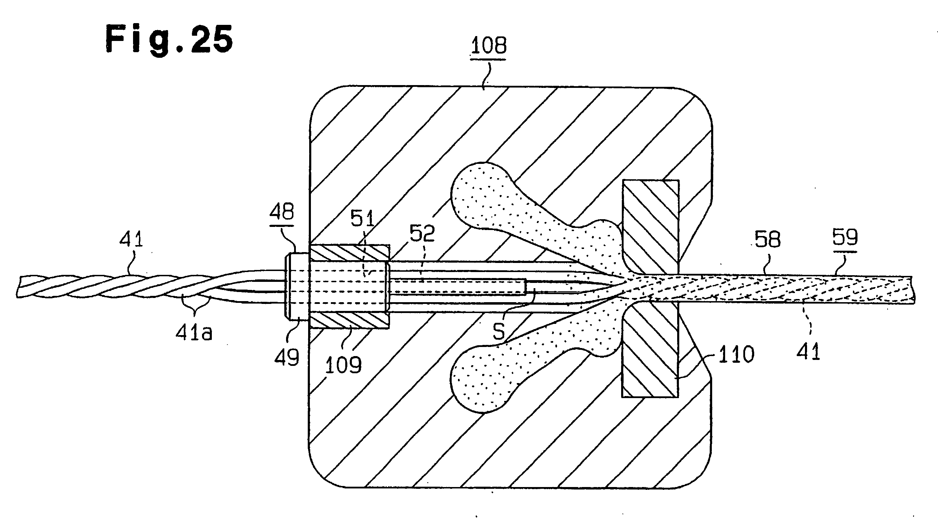

In the sixth embodiment, as shown in Fig. 25, a single-structure rubber extruder 108, which functions as the rubber supplying means, is provided instead of the liquid rubber bath 43 and the rubber extruder 55 of the first embodiment. A rotor 49 of the untwisting device 48 is rotatably supported by a metal bearing 109 at the inlet of the rubber extruder 108. The untwisting device 48 has the same structure as that of the first embodiment. Each filament 41a of the strand 41 is conveyed through one of the openings 51 and the corresponding groove 52 of the rotor 49 of the untwisting device 48. Thus, the strand is untwisted and the predetermined space S is formed between the filaments 41a.

A mouthpiece 110 is provided at the outlet of the rubber extruder 108. The strand 41 is conveyed through the mouthpiece 110 as each filament 41a of the strand 41 is retwisted by its own elasticity. Accordingly, the rubber membrane layer 58 is formed on the entire periphery of each filament 41a. As a result, the rubber membrane coated strand 59, which is made of one strand 41, is manufactured.

Thus, according to the sixth embodiment, the following advantages are provided in addition to the advantages (1) to (4) of the above embodiments.

(9) In the apparatus for manufacturing the rubber membrane coated strand of the sixth embodiment, the untwisting device 48 is provided at the inlet of the rubber extruder 108. The rubber membrane layer 58 is formed on the entire periphery of each filament 41a as the strand 41 is untwisted by the untwisting device 48. Therefore, it is not required to provide the liquid rubber bath 43, which functions as the rubber supplying means, and the rubber extruder 55 as in the first embodiment. Accordingly, the structure of the manufacturing apparatus is simplified and the rubber membrane coated strand 59 is efficiently manufactured.

### (Seventh Embodiment)

A seventh embodiment of the present invention will now be described. The differences from the other embodiments will mainly be discussed below.

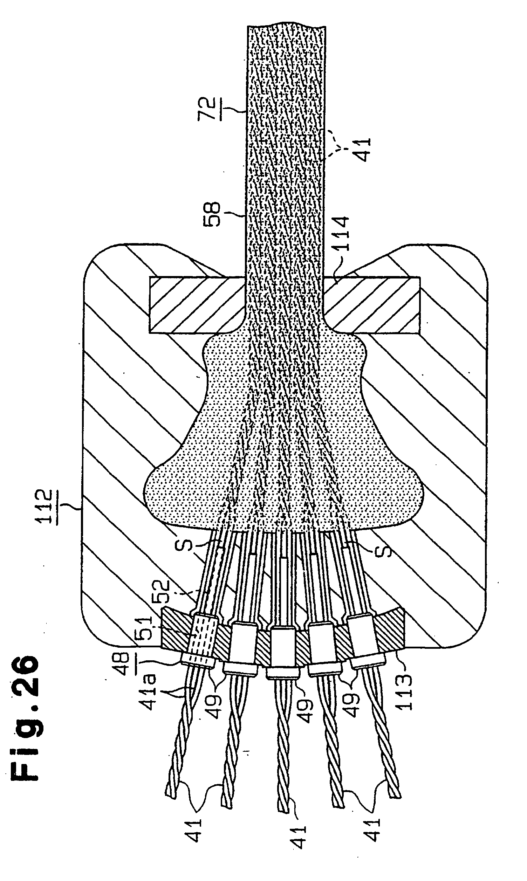

In the seventh embodiment, as shown in Fig. 26, a single-structure rubber extruder 112, which functions as the rubber supplying means, is provided instead of the liquid rubber bath 43 and the rubber extruder 55 of the fourth embodiment. Each rotor 49 of the untwisting device 48 is rotatably arranged next to another by means of a metal bearing 113 at the inlet of the rubber extruder 112. The untwisting device 48 has the same structure as that of the first and the fourth embodiments. The strands 41 are aligned laterally. Each filament 41a of the corresponding strand 41 is conveyed through one of the openings 51 and the corresponding groove 52 of each rotor 49 of the untwisting device 48. Thus, each strand 41 is untwisted and the predetermined space S is formed between the filaments 41a.

A mouthpiece 114 is provided at the outlet of the rubber extruder 112. The strand 41 is conveyed through the mouthpiece 114 as the filaments 41a of the strand 41 are retwisted by their own elasticity. Accordingly, the rubber membrane layer 58 is formed on the entire periphery of each strand 41. As a result, the ribbon-like rubber membrane coated strand 72, which is made of strands 41, is manufactured.

Thus, according to the sixth embodiment, the following advantages are provided in addition to the advantages (1) to (4), (6), and (7) of the above embodiments.

(10) In the apparatus for manufacturing the rubber membrane coated strand of seventh embodiment, the rotors 49 of the untwisting device 48 are arranged next to each other at the inlet of the rubber extruder 112. The rubber membrane layer 58 is formed on the entire periphery of the strands 41 as each strand 41 is untwisted by the rotors 49. Therefore, it is not required to provide the liquid rubber bath 43, which functions as the rubber supplying means, nor the rubber extruder 55, as in the other embodiments. Accordingly, the structure of the manufacturing apparatus is simplified and the ribbon-like rubber membrane coated strand 72 is efficiently manufactured.

Another manufacturing apparatus for a rubber membrane coated strand will now be described. The differences from the above embodiments of the invention will mainly be discussed below.

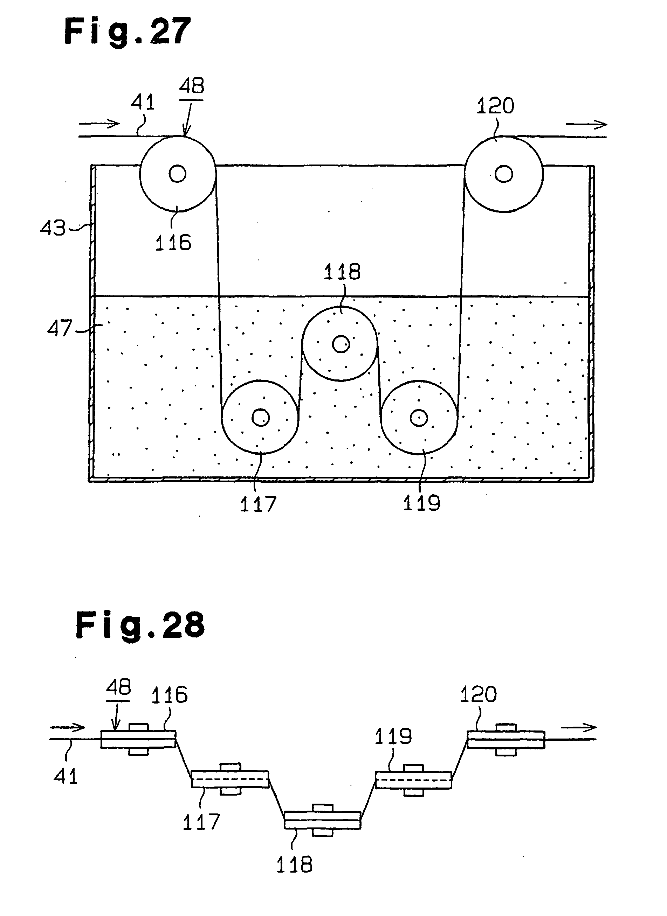

In this manufacturing apparatus, as shown in Figs. 27 and 28, a first untwisting roller 116, a second untwisting roller 117, and a third untwisting roller 118 are provided in the liquid rubber bath 43, which functions as the rubber supplying means. The first, second, and third untwisting rollers form the untwisting device 48. The position of the rollers can be changed among an upper position, a lower position, and a middle position. The untwisting rollers are gradually displaced along their axes in one direction. A first stranding roller 119 and a second stranding roller 120 are provided in the liquid rubber bath 43 to follow the untwisting rollers 116, 117, and 118. The position of the first and second stranding rollers can be changed between a lower position and an upper position. The stranding rollers are gradually displaced along their axes in the other direction. The second untwisting roller 117, the third untwisting roller 118, and the first stranding roller 119 are immersed in the liquid rubber 47 of the liquid rubber bath 43.

The strand 41, which is formed of filaments 41a made of polymeric material, is conveyed around the first, second, and third untwisting rollers 116, 117, 118. The strand 41 is bent and inclined in one direction of the rotational axis. This causes the strand 41 to deform and untwist. Thus, the strand 41 is untwisted. In this state, the rubber layer 53 is formed on the periphery of the strand 41. Then, the strand 41 is conveyed around the first stranding roller 119 and the second stranding roller 120. The strand 41 is bent and inclined in the other direction of the rotational axis. This causes the strand 41 to deform and retwist. Thus, the strand 41 is retwisted.

Thus, according to this manufacturing apparatus, the following advantages are provided in addition to the advantages (1), (3), and (4) of the above embodiments.

(11) In this apparatus for manufacturing the rubber membrane coated strand, the strand 41 is conveyed around the first, second, and third untwisting rollers 116, 117, 118. The strand 41 is bent and inclined in one direction of the rotational axis so that the strand 41 is untwisted. Then, the strand 41 is conveyed around the first stranding roller 119 and the second stranding roller 120. The strand 41 is bent and inclined in the other direction of the rotational axis so that the strand 41 is retwisted. The structure of this manufacturing apparatus is simple with only rollers 116 to 120, and it is suitable for manufacturing the rubber membrane coated strand 59 from the strand 41 that has a weak stranding force. For example, the strand 41, which is formed by twisting the filaments 41a made of polymeric material, may be suitable.

A further manufacturing apparatus for a rubber membrane coated strand will now be described. The differences from the above embodiments of the invention will mainly be discussed below.

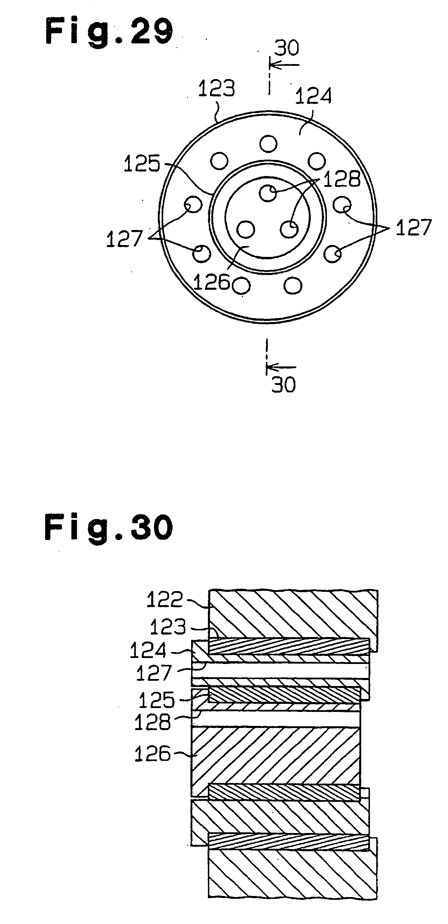

In this manufacturing apparatus, as shown in Figs. 29 and 30, the untwisting device 48 includes an annular first rotor 124 and a second rotor 126. The annular first rotor 124 is rotatably supported by a supporting member 122 by a metal bearing 123. The second rotor 126 is supported in the first rotor 124 by a metal bearing 125 to relatively rotate. Nine openings 127 are formed in the first rotor 124 and are spaced apart by predetermined angular intervals so that the strand 41 is separated and passed through the openings. Three openings 128 are formed in the second rotor 126 and are spaced apart by predetermined angular intervals so that the strand 41 is separated and passed through the openings 128.

Each strand 41, which is formed by twisting twelve filaments 41a made of metal material, or each strand 41, which is formed by twisting twelve filaments 41b made of polymeric material, is conveyed through the openings 127 of the first rotor 124 and the openings 128 of the second rotor 126. The first and second rotors 124, 126 rotate respectively and the strand 41 is untwisted.

Thus, according to this manufacturing apparatus, the following advantages are provided in addition to the advantages (1) to (4) of the above embodiments.

(12) In this apparatus for manufacturing the rubber membrane coated strand, the untwisting device 48 includes the rotatably supported annular first rotor 124 and the second rotor 126, which is supported in the first rotor 124 to rotate relative to the first rotor 124. The openings 127 and 128 are formed in the rotors 124 and 126, respectively, so that the filaments 41a or 41b of the strand 41 are separated and passed through the openings. Accordingly, the strand 41 is reliably untwisted even when the rubber membrane coated strand 59 is manufactured using a strand 41 that is formed by twisting filaments 41a or 41b in multiple layers.

A tire, in which the rubber membrane coated strand 59 or the ribbon-like rubber membrane coated strand 72 manufactured by the manufacturing apparatus of these embodiments of the invention is buried as a reinforcer of the tire, is described below.

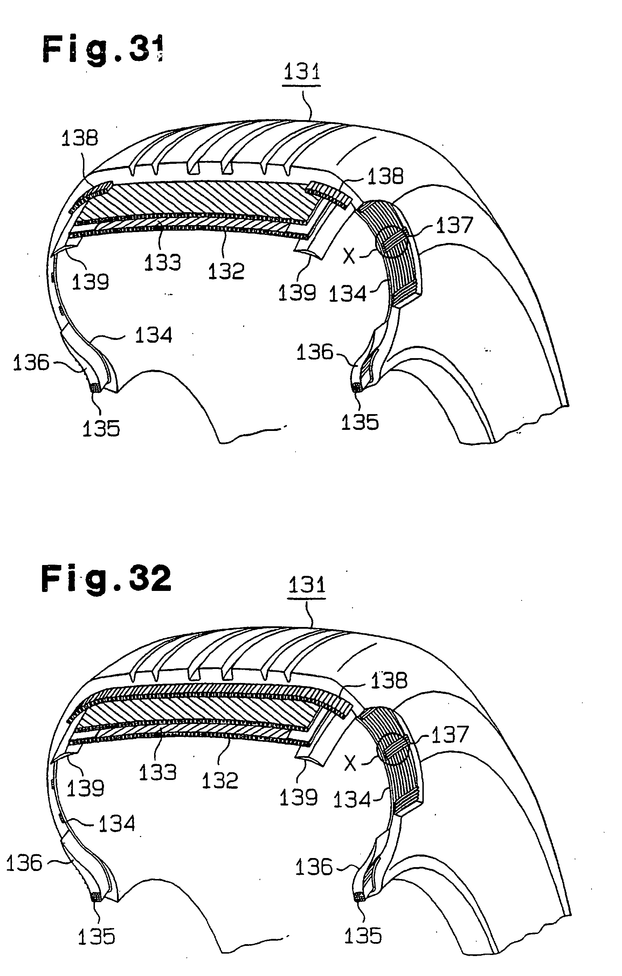

As shown in Fig. 31, an inner belt 132 and an outer belt 133 are buried at the crown area of the inflated radial tire 131. A body ply 134 is buried from the crown area to the sides. Each edge of the body ply 134 is folded over to encompass a bead wire 135 and a bead filler 136 at the bead area. A side-reinforcing ply 137 is provided on the outer side of the body ply.

Edge bands 138 are buried outward of the belts 132, 133. A hard rubber ring 139 is provided at each edge of and inward of the belts 132, 133. The rubber ring 139 includes damping rubber. The cross-section of the rubber ring 139 is a compressed triangle. The belts 132, 133 are sandwiched and retained by the edge band 138 and the rubber ring 139. Instead of providing the edge band 138 on each edge of the belts 132 and 133 as shown in Fig. 31, the edge band 138 may be provided along the entire width of the belts 132 and 133 as shown in Fig. 32.

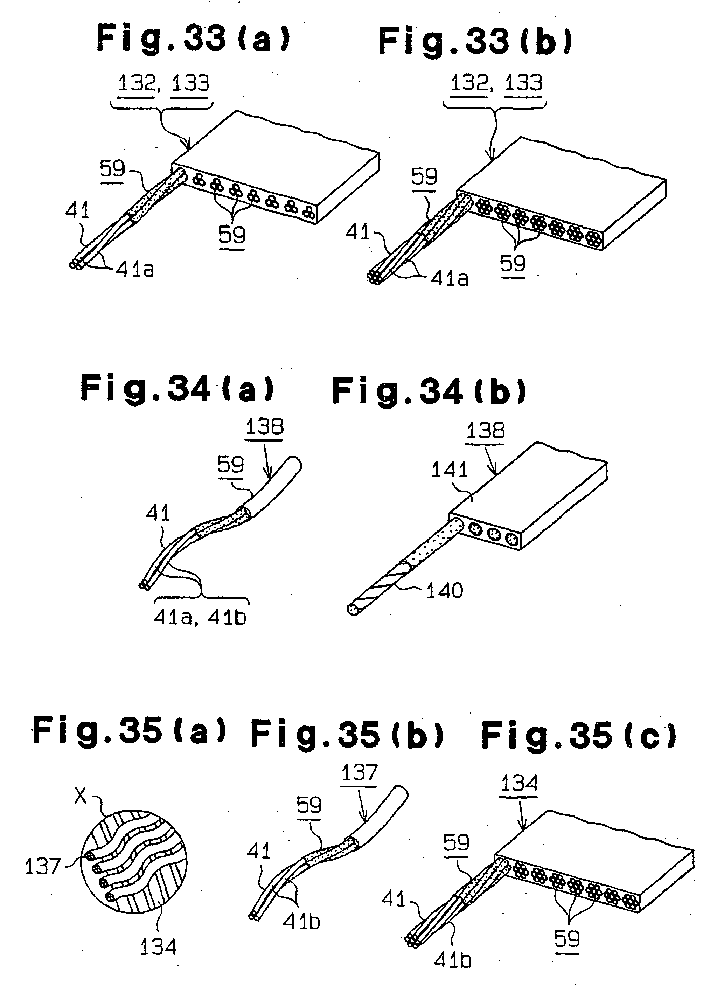

In the above mentioned radial tire 131, the ribbon-like rubber membrane coated strand is used to form the belts 132 and 133, as shown in Fig. 33 (a). The ribbon-like rubber membrane coated strand is formed by applying the rubber membrane coating with the rubber extruder on eight parallel rubber membrane coated strands 59. Each rubber membrane coated strand 59 includes the strand 41, which is formed by three filaments 41a made of metal material and which is manufactured according to the first embodiment. On an as required basis, the ribbon-like rubber membrane coated strand is used to form the belts 132, 133, as shown in Fig. 33 (b). The ribbon-like rubber membrane coated strand is formed by applying the rubber membrane coating on the parallel rubber membrane coated strands 59. Each rubber membrane coated strand 59 includes the strand 41, which is formed by seven filaments 41a made of metal material and which is manufactured according to the third embodiment. Further, two ply belts, which are manufactured continuously after the ribbon-like rubber membrane coated strand 72 is manufactured in the fourth embodiment, may be used as the belts 132, 133

As shown in Fig. 34 (a), the rubber membrane coated strand 59 is used as the edge band 138. The rubber membrane coated strand 59 includes the strand 41, which is formed by three filaments 41b made of polymeric material and which is manufactured according to the second embodiment. Also, on an as required basis, the rubber membrane coated strand 59, which includes the strand 41, which is formed of three filaments 41a made of metal material and which is manufactured according to the first embodiment, may be used. In these cases, the rubber membrane coated strand 59 is preferably deformed. For example, the rubber membrane coated strand 59 may be corrugated or coiled along its length. Furthermore, as shown in Fig. 34 (b), a ribbon-like ply 141 may be used as the edge band 138. The ribbon-like ply 141 is formed by applying the rubber membrane coating to parallel hybrid filaments 140, which are a combination of polyester and nylon.

As shown in Figs. 35 (a) and 35 (c), the ribbon-like rubber membrane coated strand is used to form the body ply 134. The ribbon-like rubber membrane coated strand is formed by applying the rubber membrane coating with the rubber extruder to eight parallel rubber membrane coated strands 59. The rubber membrane coated strand 59 includes the strand 41, which is formed of filaments 41b made of polymeric material and which is manufactured according to the second or third embodiment. Also, the body ply, which is manufactured continuously after the ribbon-like rubber membrane coated strand 72 is manufactured in the fifth embodiment, may be used as the body ply 134.

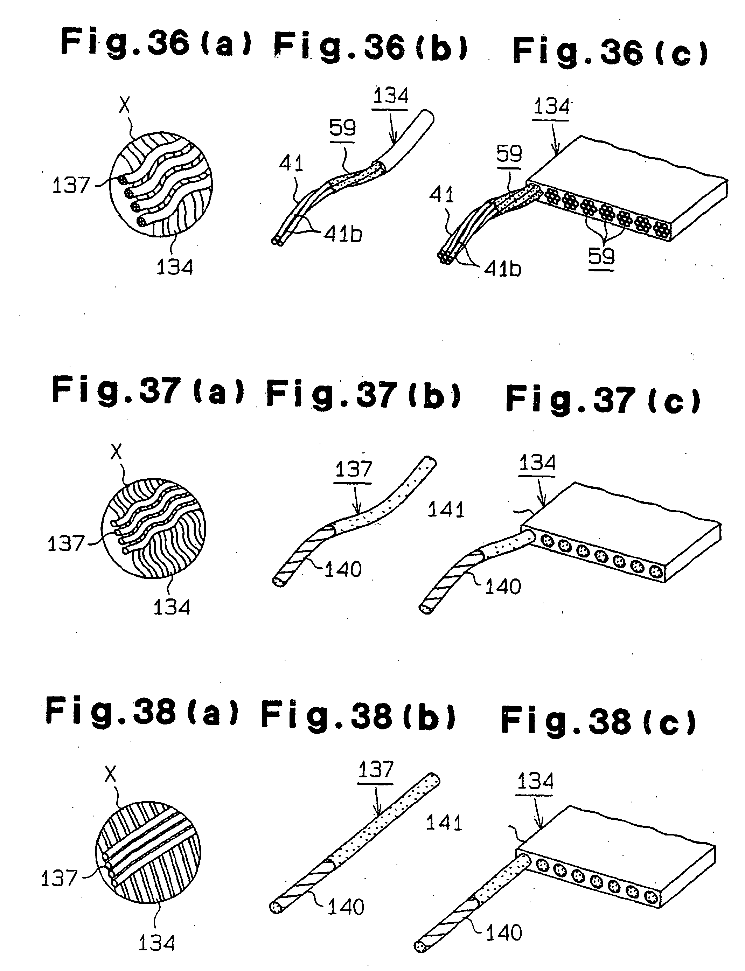

In these cases, as shown in Fig. 35 (b), the rubber membrane coated strand 59 may be used to form the side-reinforcing ply 137 attached to the body ply 134. The rubber membrane coated strand 59 includes the strand 41, which is formed of filaments 41b made of polymeric material and which is manufactured according to the second embodiment. The rubber membrane coated strand 59 of the side-reinforcing ply 137 may be deformed. For example, the rubber membrane coated strand 59 may be corrugated or coiled along the length. When the deformed rubber membrane coated strand 59 is used to form the side-reinforcing ply 137, the deformed rubber membrane coated strand 59 is preferably used also to form the body ply 134 as shown in Figs. 36 (a) to 36 (c).

Furthermore, as shown in Figs. 37 (a) and 37 (c), a ribbon-like ply 141, which is formed by applying the rubber membrane coating to parallel hybrid filaments 140 that are deformed, may be used as the body ply 134. For example, the parallel hybrid filaments 140 may be corrugated or coiled. As shown in Figs. 38 (a) and 38 (c), ribbon-like ply 141, which is formed by applying the rubber membrane coating to parallel straight hybrid filaments 140, may be used. In these cases, as shown in Figs. 37 (b) and 38 (b), the deformed hybrid filament 140 or the straight hybrid filament 140 are used as the side-reinforcing ply 137.

Accordingly, in the inflated radial tire 131 of this embodiment, the rubber membrane coated strand 59 or the ribbon-like rubber membrane coated strand 72, which are manufactured by the manufacturing apparatus of each embodiment, are used as the belts 132, 133, the body ply 134, and the edge band 138. Therefore, the combination of the filaments and the rubber is uniform and integrated. Thus, the tire allows less play against the compression, tension, and twist compared with the prior art. Accordingly, the strength and speed of operation response are improved.

In the inflated radial tire 131, the edge bands 138 and the hard rubber rings 139 sandwich and retain the belts 132, 133. The cross-section of each rubber ring 139 is a compressed triangle. This structure resists deformation of the belts 132, 133. The bead area reinforcing layer, such as the bead wire 135, is provided. Therefore, the integration of the tire and the rim is improved and quick response is obtained. As a result, the belts 132, 133, and the side wall of the tire can be thinner and lighter. In an experiment with 15 and 16-inch radial tires, the weight was reduced by approximately 15 to 20 %.

Furthermore, since deformation of the belts 132, 133 is resisted and the integration of the tire and rim is improved, the driving stability is improved. Vehicle comfort is improved by using deformed rubber membrane coated strands 59 for the body ply 134, the side-reinforcing ply 137, and the edge band. For example, the rubber membrane coated strands 59 may be corrugated or coiled.

### (Further Embodiment)

The embodiments may be modified as follows.

According to the first to seventh embodiments, the number of openings 51 and grooves 52 on the rotor 49 of the untwisting device 48 may be changed such that strands 41 having different numbers of filaments 41a, 41b can be applied.

According to the manufacturing apparatus of Figs. 27 and 28, the number of untwisting roller 116 to 118 forming the untwisting device 48 and the number of stranding roller 119, 120 may be changed such that the strands 41 having different stranding forces can be used.

According to the manufacturing apparatus of Figs. 29 and 30, the number of openings 127, 128 on each rotor 124, 126 of the untwisting device 48 may be changed such that strands 41 with different numbers of filament 41a, 41b can be used.

In the above further embodiments, substantially the same advantages as each embodiment can be obtained.

In the specification, to "retwist" after the strand is untwisted means to allow the strand to retwist naturally or to forcefully retwist the strand.

## Claims

1. A manufacturing apparatus for a rubber membrane coated strand, wherein the strand (41) is formed by twisting filaments (41a ; 41b), comprising
rubber supplying means (43; 108; 112) including a container for liquefied rubber (47);
guiding means (44-46) for guiding the strand (41) to run through the rubber supplying means (43; 108; 112); and
untwisting means (48) for untwisting each filament (41a; 41b) so that a rubber membrane is coated all around each filament (41a; 41b) when the strand (41) is guided through the rubber supplying means (43; 108; 112),
**characterized in that** the untwisting means (48) comprises a rotor (49) having a main body (49a) and a small diameter projection (49c) formed on the main body (49a), the main body (49a) has a plurality of openings (51; 51A; 51B) formed at a predetermined distance from each other, through which the filaments (41a; 41b) separately pass, the small diameter projection (49c) has a plurality of grooves (52), through which the filaments (41a; 41b) separately pass, and each of which is connected with each opening (51; 51A; 51B) of the main body (49a), wherein when each filament (41a; 41b) of the strand (41) is conveyed through the opening (51; 51A; 51B) and the corresponding groove (52), each filament (41a; 41b) is untwisted and a predetermined space is formed between the filaments (41a; 41b).

2. The manufacturing apparatus for the rubber membrane coated strand according to claim 1,
**characterized by** pre-treatment means (42) for performing pre-treatment on the strand (41) upstream of the rubber supplying means (43; 108; 112).

3. The manufacturing apparatus for the rubber membrane coated strand according to claim 1 or 2,
**characterized by** post-treatment means (54) for performing post-treatment on the strand (41) downstream of the rubber supplying means (43; 108; 112).

4. The manufacturing apparatus for the rubber membrane coated strand according to any one of claims 1 to 3,
**characterized in that** each opening (51; 51A; 51B) is formed substantially along an axis of the rotor (49).

5. The manufacturing apparatus for the rubber membrane coated strand according to any one of claims 1 to 4,
**characterized in that** each groove (52) is formed substantially along an axis of the rotor (49).

6. The manufacturing apparatus for the rubber membrane coated strand according to any one of claims 1 to 5,
**characterized by** rotating means (63) for applying a rotational force to the rotor (49) in the direction of twisting.

7. The manufacturing apparatus for the rubber membrane coated strand according to claim 6,
**characterized in that** the rotating means (63) is a drive motor.

## Patentansprüche

1. Fertigungsvorrichtung für einen Gummimembran beschichteten Strang, wobei der Strang (41) durch verdrillte Filamente (41a; 41b) ausgebildet ist, umfassend
ein Gummi zuführendes Mittel (43; 108; 112), welches einen Behälter für verflüssigten Gummi (47) aufweist;
ein Führungsmittel (44-46), um den Strang (41) zu führen, damit er durch das Gummi zuführende Mittel (43; 108; 112) verläuft; und
ein Entdrillungsmittel (48), um jedes Filament (41a; 41b) zu entdrillen, so dass eine Gummimembran überall um jedes Filament beschichtet wird, wenn der Strang durch das Gummi zuführende Mittel (43; 108; 112) geführt wird,
**dadurch gekennzeichnet,**
**dass** das Entdrillungsmittel (48) einen Rotor (49) umfasst, welcher einen Hauptkörper (49a) und einen auf dem Hauptkörper (49a) ausgebildeten Vorsprung (49c) mit einem kleinen Durchmesser aufweist, wobei der Hauptkörper (49a) eine Mehrzahl von Öffnungen (51; 51A; 51B) aufweist, welche mit einem vorbestimmten Abstand, durch welche die Filamente (41a; 41b) getrennt verlaufen, voneinander ausgebildet sind, wobei der Vorsprung (49c) mit dem kleinen Durchmesser eine Mehrzahl von Vertiefungen (52) aufweist, durch welche die Filamente (41a; 41b) getrennt verlaufen und welche jede mit jeder Öffnung (51; 51A; 51B) des Hauptkörpers verbunden ist, wobei, wenn jedes Filament (41a; 41b) des Stranges (41) durch die Öffnung (51; 51A; 51B) und die entsprechende Vertiefung (52) befördert wird, jedes Filament (41a; 41b) entdrillt und ein vorbestimmter Zwischenraum zwischen den Filamenten (41a; 41b) ausgebildet wird.

2. Fertigungsvorrichtung für den Gummimembran beschichteten Strang nach Anspruch 1,
**gekennzeichnet durch** ein Vorbehandlungsmittel (42), um eine Vorbehandlung auf dem Strang (41) stromaufwärts des Gummi zuführenden Mittels (43; 108; 112) auszuführen.

3. Fertigungsvorrichtung für den Gummimembran beschichteten Strang nach Anspruch 1 oder 2,
**gekennzeichnet durch** ein Nachbehandlungsmittel (54), um eine Nachbehandlung auf dem Strang (41) stromabwärts des Gummi zuführenden Mittels (43; 108; 112) auszuführen.

4. Fertigungsvorrichtung für den Gummimembran beschichteten Strang nach einem der Ansprüche 1 bis 3,
**dadurch gekennzeichnet, dass** jede Öffnung (51; 51A; 51B) im Wesentlichen entlang einer Achse des Rotors (49) ausgebildet ist.

5. Fertigungsvorrichtung für den Gummimembran beschichteten Strang nach einem der Ansprüche 1 bis 4,
**dadurch gekennzeichnet, dass** jede Vertiefung (52) im Wesentlichen entlang einer Achse des Rotors (49) ausgebildet ist.

6. Fertigungsvorrichtung für den Gummimembran beschichteten Strang nach einem der Ansprüche 1 bis 5,
**gekennzeichnet durch** ein Drehmittel (63), um eine Drehkraft auf den Rotor (49) in der Drehrichtung aufzubringen.

7. Fertigungsvorrichtung für den Gummimembran beschichteten Strang nach Anspruch 6,
**dadurch gekennzeichnet, dass** das Drehmittel (63) ein Antriebsmotor ist.

## Revendications

1. Dispositif pour la fabrication d'un fil recouvert d'une membrane de caoutchouc, dans lequel le fil (41) est formé en tordant des filaments (41a ; 41b), comprenant :
un moyen de fourniture de caoutchouc (43 ; 108 ; 112) incluant un conteneur pour caoutchouc liquéfié (47) ;
un moyen de guidage (44-46) pour guider le fil (41) afin qu'il passe à travers le moyen de fourniture de caoutchouc (43 ; 108 ; 112) ; et un moyen de détorsion (48) pour détordre chaque filament (41a ; 41b) de sorte qu'une membrane de caoutchouc soit enduite tout autour de chaque filament (41a ; 41b) lorsque le fil (41) est guidé à travers le moyen de fourniture de caoutchouc (43 ; 108 ; 112),
**caractérisé en ce que** le moyen de détorsion (48) comprend un rotor (49) ayant un corps principal (49a) et une extension de petit diamètre (49c) formée sur le corps principal (49a), le corps principal (49a) présente une pluralité d'ouvertures (51 ; 51A ; 51B) formées à une distance prédéterminée l'une de l'autre, à travers lesquelles les filaments (41a ; 41b) passent séparément, l'extension de petit diamètre (49c) présente une pluralité de gorges (52) à travers lesquelles les filaments (41a ; 41b) passent séparément, et chacun d'eux est connecté à chaque ouverture (51 ; 51A ; 51B) du corps principal (49a), dans lequel lorsque chaque filament (41a ; 41b) du fil (41) est transporté à travers l'ouverture (51 ; 51A ; 51B) et la gorge correspondante (52), chaque filament (41a ; 41b) est détordu et un espace prédéterminé est formé entre les filaments (41a ; 41b).

2. Dispositif pour la fabrication d'un fil recouvert d'une membrane de caoutchouc selon la revendication 1,
**caractérisé en ce qu'**il comprend en outre un moyen de prétraitement (42) pour effectuer le prétraitement du fil (41) en amont du moyen de fourniture de caoutchouc (43 ; 108 ; 112).

3. Dispositif pour la fabrication d'un fil recouvert d'une membrane de caoutchouc selon la revendication 1 ou 2,
**caractérisé en ce qu'**il comprend en outre un moyen de post-traitement (54) pour effectuer le post-traitement du fil (41) en aval du moyen de fourniture de caoutchouc (43 ; 108 ; 112).

4. Dispositif pour la fabrication d'un fil recouvert d'une membrane de caoutchouc selon l'une quelconque des revendications 1 à 3,
**caractérisé en ce que** chaque ouverture (51 ; 51A ; 51B) est formée sensiblement le long d'un axe du rotor (49).

5. Dispositif pour la fabrication d'un fil recouvert d'une membrane de caoutchouc selon l'une quelconque des revendications 1 à 4,
**caractérisé en ce que** chaque gorge (52) est formée sensiblement le long d'un axe du rotor (49).

6. Dispositif pour la fabrication d'un fil recouvert d'une membrane de caoutchouc selon l'une quelconque des revendications 1 à 5,
**caractérisé en ce qu'**il comprend en outre un moyen de rotation (63) pour appliquer une force de rotation au rotor (49) dans la direction de torsion.

7. Dispositif pour la fabrication d'un fil recouvert d'une membrane de caoutchouc selon la revendication 6,
**caractérisé en ce que** le moyen de rotation (63) est un moteur d'entraînement.
